(19) **Europäisches Patentamt**
**European Patent Office**
**Office européen des brevets**

(11) **EP 4 787 792 A1**

(12) **EUROPEAN PATENT APPLICATION**
published in accordance with Art. 153(4) EPC

(43) Date of publication:
**05.08.2026 Bulletin 2026/32**

(21) Application number: **24881452.7**

(22) Date of filing: **12.10.2024**

(51) International Patent Classification (IPC):
**H04L 27/26** (2006.01)    **H04W 4/02** (2018.01)
**H04W 4/30** (2018.01)

(52) Cooperative Patent Classification (CPC):
**H04L 27/26; H04W 4/02; H04W 4/30**

(86) International application number:
**PCT/CN2024/124572**

(87) International publication number:
**WO 2025/087086 (01.05.2025 Gazette 2025/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.10.2023 CN 202311418772**

(71) Applicant: **HUAWEI TECHNOLOGIES CO., LTD.**
**Shenzhen 518129 (CN)**

(72) Inventors:
• **XIE, Xinqian**
  **Shenzhen, Guangdong 518129 (CN)**
• **WANG, Zhonglong**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD AND APPARATUS**

(57)     A communication method and apparatus are applied to the field of communication technologies. The method includes: A first communication apparatus determines $\{c(n)(m)\}$ based on $\{b(n)\}$ and $\{a(n)(m)\}$, where an element $c(n)(m)$ in $\{c(n)(m)\}$ satisfies $c(n)(m) = a(n)(m) \times b(n)$ or $c(n)(m) = a(n)(m) \times B(n)$, and $\{B(n)\}$ is obtained by performing a Fourier transform on $\{b(n)\}$; determines $\{e(n)(m)\}$ based on $\{d(m)\}$ and $\{c(n)(m)\}$, where an element $e(n)(m)$ in $\{e(n)(m)\}$ satisfies $e(n)(m) = c(n)(m) \times d(m)$ or $e(n)(m) = c(n)(m) \times D(m)$, and $\{D(m)\}$ is obtained by performing a Fourier transform on $\{d(m)\}$; and sends M first signals, where the M first signals are located in M time units, the M first signals are generated based on $\{e(n)(m)\}$, an $i^{th}$ first signal among the M first signals is located in an $i^{th}$ time unit among the M time units. According to embodiments of this application, performance of communication and sensing integration can be improved.

First communication apparatus

S301: Determine a first symbol based on a first sequence and a fourth symbol

S302: Determine a second symbol based on a second sequence and the first symbol

S303: Send M first signals, where the M first signals are generated based on the second symbol, and the M first signals are located in M time units

S304b: Receive echo signals of the M first signals

S305b: Process the echo signals of the M first signals

Second communication apparatus

S304a: Receive the M first signals

To-be-sensed target

S305a: Process the M first signals

FIG. 3

**Description**

CROSS-REFERENCE TO RELATED APPLICATIONS

This application claims priority to Chinese Patent Application No. 202311418772.2, filed with the China National Intellectual Property Administration on October 27, 2023 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

During the evolution from a 5th-generation (5th-generation, 5G) mobile communication system to 5G-advanced (5G-advanced, 5G-A) technology, integrated sensing and communication is considered as one of key technologies capable of extending capabilities of a mobile communication network. The core concept of integrated sensing and communication is to add a sensing capability to the mobile communication network and construct capabilities to detect, track, and image targets. This allows communication and sensing capabilities to be integrated into a single network, thereby achieving harmonious coexistence and mutual benefit. The principle of sensing technology is as follows: A transmitting device sends a radio wave (that is, a sensing signal) in a specific direction. When the radio wave irradiates the surface of a target, a reflected wave (that is, an echo signal of the sensing signal) is generated. A receiving device then receives and processes the reflected wave to obtain sensing data, such as a location, a speed, or a type of the target.

Currently, orthogonal frequency division multiplexing (orthogonal frequency division multiplexing, OFDM) waveform technology is usually used for a communication signal. OFDM enables the construction of orthogonal subcarriers in the frequency domain, allowing different modulation symbols to be mapped to these orthogonal subcarriers and transmitted simultaneously. However, when applied to integrated sensing and communication scenarios, the performance of OFDM fall significantly short of the ideal performance of sensing.

SUMMARY

Embodiments of this application provide a communication method and apparatus to help improve performance of communication and sensing integration.

According to a first aspect, this application provides a communication method, and the method may be performed by a first communication apparatus. The first communication apparatus may be, for example, a first network device, or a component in the first network device. This is not limited. For example, an execution body is the first network device. The method may include: The first network device may determine a first symbol based on a first sequence and a fourth symbol; determine a second symbol based on a second sequence and the first symbol; and send M first signals, where the M first signals are generated based on the second symbol, the M first signals are located in M time units, an $i^{th}$ first signal among the M first signals is located in an $i^{th}$ time unit among the M time units, i is a positive integer less than or equal to M, and M is a positive integer.

Alternatively, the first network device may determine a second symbol based on a first sequence, a second sequence, and a fourth symbol; and send M first signals, where the M first signals are generated based on the second symbol, the M first signals are located in M time units, an $i^{th}$ first signal among the M first signals is located in an $i^{th}$ time unit among the M time units, i is a positive integer less than or equal to M, and M is a positive integer.

Optionally, the first network device may send the M first signals to a second network device. Alternatively, the first network device may send the M first signals to a second terminal device. Alternatively, the first network device may further receive echo signals of the M first signals. Optionally, the network device may further process the echo signals of the M first signals.

In this embodiment of this application, the first network device processes the fourth symbol based on the first sequence and the second sequence, to implement extension in frequency domain. The first network device sends the M first signals in the M time units, to implement extension in time domain. In this embodiment of this application, a to-be-sent symbol is extended in frequency domain and time domain, so that each subsequent signal can occupy an entire carrier bandwidth and an entire time domain symbol. Compared with a case in which the first network device does not extend the to-be-sent symbol in frequency domain and time domain, performance in a subsequent signal processing process can be improved. For example, when an OFDM waveform technology is applied to an integrated sensing and communication scenario, this embodiment of this application can alleviate a performance loss problem caused when the OFDM waveform technology is applied to the integrated sensing and communication scenario, thereby helping improve performance of communication and sensing integration.

For example, when the OFDM waveform technology is applied to a sensing scenario in which a plurality of users use a frequency division multiplexing manner, this embodiment of this application can alleviate a problem that distance sensing precision and resolution are reduced because a single user occupies only a part of a frequency domain resource in the sensing scenario, thereby helping improve performance of communication and sensing integration.

For another example, when the OFDM waveform technology is applied to a sensing scenario in which a plurality of users use a time division multiplexing manner, this embodiment of this application can alleviate a problem that speed sensing precision and resolution are reduced because a single user occupies only a part of a time domain resource in the sensing scenario, thereby helping improve performance of communication and sensing integration.

In a possible design, the first sequence may be *{b(n)}*, the fourth symbol may be {a(n)(m)}, the first symbol may be {c(n)(m)}, the second sequence may be {d(m)}, and the second symbol may be {e(n)(m)}. {b(n)} includes N elements, {d(m)} includes M elements, {a(n)(m)}, {c(n)(m)}, and {e(n)(m)} each includes N × M elements, n belong to {1, ..., N}, m belong to {1, ..., M}, and N is a positive integer. An element c(n)(m) in {c(n)(m)} satisfies c(n)(m) = a(n)(m) × b(n) or c(n)(m) = a(n)(m) × B(n), where B(n) belongs to {B(n)} and {B(n)} is obtained by performing a Fourier transform on {b(n)}; and an element e(n)(m) in {e(n)(m)} satisfies e(n)(m) = c(n)(m) × d(m) or e(n)(m) = c(n)(m) × D(m), where D(m) belongs to {D(m)} and {D(m)} is obtained by performing a Fourier transform on {d(m)}.

Based on a possible implementation of the foregoing design, an element b(n) in {b(n)} satisfies

$$b(n) = e^{-j\frac{2\pi}{N}(\alpha_1 n^2 + \beta_1 n + \gamma_1)} \quad \text{or} \quad b(n) = e^{-j\frac{2\pi}{N}(\alpha_1 n^2 + \beta_1 n)}; \text{ and/or an element d(m) in } \{d(m)\} \text{ satisfies}$$

$$d(m) = e^{-j\frac{2\pi}{M}(\alpha_2 m^2 + \beta_2 m + \gamma_2)} \quad \text{or} \quad d(m) = e^{-j\frac{2\pi}{M}(\alpha_2 m^2 + \beta_2 m)}. \text{ Here, } \alpha_1, \beta_1, \gamma_1, \alpha_2, \beta_2, \text{ and } \gamma_2 \text{ are all real}$$

numbers.

Based on a possible implementation of the foregoing design, the first network device may further send first information. The first information may indicate at least one of $\alpha_1$, $\beta_1$, or $\gamma_1$, and/or the first information indicates at least one of $\alpha_2$, $\beta_2$, or $\gamma_2$. In this way, a signal receive end (for example, the second terminal device or the second network device) may determine the first sequence and the second sequence based on the first information. For example, the first network device may send the first information to the second terminal device. For another example, the first network device may send the first information to the second network device.

Based on another possible implementation of the foregoing design, the first network device may further receive first information. The first information may indicate at least one of $\alpha_1$, $\beta_1$, or $\gamma_1$, and/or the first information indicates at least one of $\alpha_2$, $\beta_2$, or $\gamma_2$. In this way, the first network device may determine the first sequence and the second sequence based on the first information. For example, the first network device may receive the first information from the second network device.

According to a second aspect, this application provides a communication method, and the method may be performed by a first communication apparatus. The first communication apparatus may be, for example, a first terminal device, or a component in the first terminal device. This is not limited. For example, an execution body is the first terminal device. The method may include: The first terminal device may determine a first symbol based on a first sequence and a fourth symbol; determine a second symbol based on a second sequence and the first symbol; and send M first signals, where the M first signals are generated based on the second symbol, the M first signals are located in M time units, an $i^{th}$ first signal among the M first signals is located in an $i^{th}$ time unit among the M time units, $i$ is a positive integer less than or equal to M, and M is a positive integer.

Alternatively, the first terminal device may determine a second symbol based on a first sequence, a second sequence, and a fourth symbol; and send M first signals, where the M first signals are generated based on the second symbol, the M first signals are located in M time units, an $i^{th}$ first signal among the M first signals is located in an $i^{th}$ time unit among the M time units, i is a positive integer less than or equal to M, and M is a positive integer.

Optionally, the first terminal device may send the M first signals to a second network device.

In a possible design, the first sequence may be {b(n)}, the fourth symbol may be {a(n)(m)}, the first symbol may be {c(n)(m)}, the second sequence may be {d(m)}, and the second symbol may be {e(n)(m)}. {b(n)} includes N elements, {d(m)} includes M elements, {a(n)(m)}, {c(n)(m)}, and {e(n)(m)} each includes N × M elements, n belong to {1, ..., N}, m belong to {1, ..., M}, and N is a positive integer. An element c(n)(m) in {c(n)(m)} satisfies c(n)(m) = a(n)(m) × b(n) or c(n)(m) = a(n)(m) × B(n), where B(n) belongs to {B(n)} and {B(n)} is obtained by performing a Fourier transform on {b(n)}; and an element e(n)(m) in {e(n)(m)} satisfies e(n)(m) = c(n)(m) × d(m) or e(n)(m) = c(n)(m) × D(m), where D(m) belongs to {D(m)} and {D(m)} is obtained by performing a Fourier transform on {d(m)}.

In this embodiment of this application, the first terminal device processes the fourth symbol based on the first sequence and the second sequence, to implement extension in frequency domain. The first terminal device sends the M first signals in the M time units, to implement extension in time domain. In this embodiment of this application, a to-be-sent symbol is extended in frequency domain and time domain, so that each subsequent signal can occupy an entire carrier bandwidth and an entire time domain symbol. Compared with a case in which the first network device does not extend the to-be-sent symbol in frequency domain and time domain, performance in a subsequent signal processing process can be improved. For example, when an OFDM waveform technology is applied to an integrated sensing and communication scenario, this embodiment of this application can alleviate a performance loss problem caused when the OFDM waveform technology is applied to the integrated sensing and communication scenario, thereby helping improve performance of communication and sensing integration.

For example, when the OFDM waveform technology is applied to a sensing scenario in which a plurality of users use a frequency division multiplexing manner, this embodiment of this application can alleviate a problem that distance sensing precision and resolution are reduced because a single user occupies only a part of a frequency domain resource in the sensing scenario, thereby helping improve performance of communication and sensing integration.

For another example, when the OFDM waveform technology is applied to a sensing scenario in which a plurality of users use a time division multiplexing manner, this embodiment of this application can alleviate a problem that speed sensing precision and resolution are reduced because a single user occupies only a part of a time domain resource in the sensing scenario, thereby helping improve performance of communication and sensing integration.

Based on a possible implementation of the foregoing design, an element b(n) in {b(n)} satisfies

$$b(n) = e^{-j\frac{2\pi}{N}(\alpha_1 n^2 + \beta_1 n + \gamma_1)} \quad \text{or} \quad b(n) = e^{-j\frac{2\pi}{N}(\alpha_1 n^2 + \beta_1 n)} \text{ ; and/or an element d(m) in } \{d(m)\} \text{ satisfies}$$

$$d(m) = e^{-j\frac{2\pi}{M}(\alpha_2 m^2 + \beta_2 m + \gamma_2)} \quad \text{or} \quad d(m) = e^{-j\frac{2\pi}{M}(\alpha_2 m^2 + \beta_2 m)}. \text{ Here, } \alpha_1, \beta_1, \gamma_1, \alpha_2, \beta_2, \text{ and } \gamma_2 \text{ are all real numbers.}$$

Based on a possible implementation of the foregoing design, the first terminal device may receive first information. The first information may indicate at least one of $\alpha_1$, $\beta_1$, or $\gamma_1$, and/or the first information indicates at least one of $\alpha_2$, $\beta_2$, or $\gamma_2$. In this way, the first terminal device may determine the first sequence and the second sequence based on the first information. For example, the first terminal device may receive the first information from the second network device.

Based on a possible design of the first aspect or the second aspect, the fourth symbol may be obtained by performing an N-point Fourier transform on the fifth symbol; or the fourth symbol may be obtained by performing an M-point Fourier transform on the fifth symbol; or the fourth symbol may be obtained by performing both an N-point Fourier transform and an M-point Fourier transform on the fifth symbol. For example, the fourth symbol may be {a(n)(m)}, and the fifth symbol may be {h(n)(m)}, where {h(n)(m)} includes N × M elements.

Based on the foregoing design, the fourth symbol may have a plurality of implementations. The implementations are flexible, and are applicable to different sensing scenarios.

Based on a possible design of the first aspect or the second aspect, at least one element in {h(n)(m)} may be determined based on K-bit information, where K is one of 1, 2, 4, 6, 8, 10, 12, or 14. Optionally, a remaining element in {h(n)(m)} other than the at least one element determined based on the K-bit information may be obtained by adding zeros.

Based on a possible design of the first aspect or the second aspect, the first communication apparatus (for example, the first network device or the first terminal device) may further determine a third symbol based on a first coefficient, a second coefficient, and the second symbol, and perform an inverse Fourier transform on the third symbol to obtain the M first signals. For example, the first coefficient may be {x(n)}, the second coefficient may be {y(m)}, the second symbol may be {e(n)(m)}, and the third symbol may be {f(n)(m)}, where {x(n)} includes N elements, {y(m)} includes M elements, {f(n)(m)} includes N × M elements, and an element f(n)(m) in {f(n)(m)} satisfies $f(n)(m) = e(n)(m) \times x(n) \times y(m)$.

An element x(n) in {x(n)} may satisfy a first characteristic, a second characteristic, a third characteristic, or a fourth characteristic; and/or an element y(m) in {y(m)} may satisfy a fifth characteristic, a sixth characteristic, a seventh characteristic, or an eighth characteristic.

For example, the first characteristic may be: when $n$ is less than $p$, $x(n)$ is less than $x(n+1)$, and when $n$ is greater than $p$, $x(n)$ is less than or equal to $x(n-1)$; the second characteristic may be: when $n$ is less than $p$, $x(n)$ is greater than $x(n+1)$, and when $n$ is greater than p, $x(n)$ is greater than or equal to $x(n-1)$; the third characteristic may be: when $n$ is less than $p1$, $x(n)$ is greater than $x(n+1)$, when $n$ is greater than $p1$ and less than $p2$, $x(n)$ is greater than or equal to $x(n-1)$, when $n$ is greater than $p2$ and less than $p3$, $x(n)$ is less than or equal to $(n-1)$, and when $n$ is greater than $p3$, $x(n)$ is greater than or equal to $x(n-1)$; the fourth characteristic may be: when $n$ is less than p1, $x(n)$ is less than $x(n+1)$, when $n$ is greater than $p1$ and less than $p2$, $x(n)$ is less than or equal to $x(n-1)$, when $n$ is greater than $p2$ and less than $p3$, $x(n)$ is greater than or equal to $(n-1)$, and when $n$ is greater than $p3$, $x(n)$ is less than or equal to $x(n-1)$; and $p, p1, p2,$ and $p3$ are all integers greater than 1 and less than N.

For example, the fifth characteristic may be: when $m$ is less than $q$, $y(m)$ is less than $y(m+1)$, and when $m$ is greater than $q$, $y(m)$ is less than or equal to $y(m-1)$; the sixth characteristic may be: when $m$ is less than $q$, $y(m)$ is greater than $y(m+1)$, and when $m$ is greater than $q$, $y(m)$ is greater than or equal to $y(m-1)$; the seventh characteristic may be: when m is less than $q1$, $y(m)$ is greater than $y(m+1)$, when $m$ is greater than $q1$ and less than $q2$, $y(m)$ is greater than or equal to $y(m-1)$, when $m$ is greater than $q2$ and less than $q3$, $y(m)$ is less than or equal to $(m-1)$, and when m is greater than

*q3, y(m)* is greater than or equal to *y(m* - 1); the eighth characteristic may be: when m is less than q1, *y(m)* is less than *y(m* + 1), when m is greater than q1 and less than *q2, y(m)* is less than or equal to *y(m* - 1), when m is greater than q2 and less than *q3, y(m)* is greater than or equal to (m - 1), and when m is greater than q3, *y(m)* is less than or equal to *y(m* - 1); and *q, q1, q2,* and *q*3 are all integers greater than 1 and less than M.

Based on the foregoing design, coefficients (that is, the first coefficient and the second coefficient) for processing a sent symbol by the transmitting device can be flexibly adjusted, to satisfy sensing requirements in different scenarios and improve sensing performance.

Based on a possible design of the first aspect or the second aspect, the $i^{th}$ first signal may be generated based on {e(n)(i)} in {e(n)(m)}, and {e(n)(i)} includes N elements.

According to a third aspect, this application provides a communication method, and the method may be performed by a second communication apparatus. The second communication apparatus may be, for example, a second network device, or a component in the second network device. This is not limited. For example, an execution body is the second network device. The method includes: The second network device may receive M first signals, where the M first signals are located in M time units, an $i^{th}$ first signal among the M first signals is located in an $i^{th}$ time unit among the M time units, M is a positive integer, and *i* is a positive integer less than or equal to M; and process the M first signals. The M first signals are generated based on a second symbol, the second symbol is determined based on a second sequence and a first symbol, and the first symbol is determined based on a first sequence and a fourth symbol.

Optionally, the second network device may receive the M first signals from a first network device. Alternatively, the second network device may receive the M first signals from a first terminal device.

In a possible design, the first sequence may be {b(n)}, the fourth symbol may be {a(n)(m)}, the first symbol may be {c(n)(m)}, the second sequence may be {d(m)}, and the second symbol may be {e(n)(m)}. {b(n)} includes N elements, {d(m)} includes M elements, {a(n)(m)}, {c(n)(m)}, and {e(n)(m)} each includes N × M elements, *n* belong to {1, ..., N}, *m* belong to {1, ..., M}, and N is a positive integer. An element c(n)(m) in {c(n)(m)} satisfies c(n)(m) = a(n)(m) × b(n) or c(n)(m) = a(n)(m) × B(n), where B(n) belongs to {B(n)} and {B(n)} is obtained by performing a Fourier transform on {b(n)}; and an element e(n)(m) in {e(n)(m)} satisfies e(n)(m) = c(n)(m) × d(m) or e(n)(m) = c(n)(m) × D(m), where D(m) belongs to {D(m)} and {D(m)} is obtained by performing a Fourier transform on {d(m)}.

Based on a possible implementation of the foregoing design, an element b(n) in {b(n)} satisfies

$$b(n) = e^{-j\frac{2\pi}{N}(\alpha_1 n^2 + \beta_1 n + \gamma_1)} \quad \text{or} \quad b(n) = e^{-j\frac{2\pi}{N}(\alpha_1 n^2 + \beta_1 n)} \text{ ; and/or an element d(m) in {d(m)} satisfies}$$

$$d(m) = e^{-j\frac{2\pi}{M}(\alpha_2 m^2 + \beta_2 m + \gamma_2)} \quad \text{or} \quad d(m) = e^{-j\frac{2\pi}{M}(\alpha_2 m^2 + \beta_2 m)} \text{ . Here, } \alpha_1, \beta_1, \gamma_1, \alpha_2, \beta_2, \text{ and } \gamma_2 \text{ are all real}$$

numbers.

Based on a possible implementation of the foregoing design, the second network device may further send first information, where the first information may indicate at least one of $\alpha_1$, $\beta_1$, or $\gamma_1$, and/or the first information indicates at least one of $\alpha_2$, $\beta_2$, or $\gamma_2$. For example, the second network device may send the first information to the first network device. For another example, the second network device may send the first information to the first terminal device.

Based on another possible implementation of the foregoing design, the second network device may further receive first information, where the first information may indicate at least one of $\alpha_1$, $\beta_1$, or $\gamma_1$, and/or the first information indicates at least one of $\alpha_2$, $\beta_2$, or $\gamma_2$. For example, the second network device may receive the first information from the first network device.

According to a fourth aspect, this application provides a communication method, and the method may be performed by a second communication apparatus. The second communication apparatus may be, for example, a second terminal device, or a component in the second terminal device. This is not limited. For example, an execution body is the second terminal device. The method includes: The second terminal device may receive M first signals, where the M first signals are located in M time units, an $i^{th}$ first signal among the M first signals is located in an $i^{th}$ time unit among the M time units, M is a positive integer, and *i* is a positive integer less than or equal to M; and process the M first signals. The M first signals are generated based on a second symbol, the second symbol is determined based on a second sequence and a first symbol, and the first symbol is determined based on a first sequence and a fourth symbol.

Optionally, the second terminal device may receive the M first signals from a first network device.

In a possible design, the first sequence may be {b(n)}, the fourth symbol may be {a(n)(m)}, the first symbol may be {c(n)(m)}, the second sequence may be {d(m)}, and the second symbol may be {e(n)(m)}. {b(n)} includes N elements, {d(m)} includes M elements, {a(n)(m)}, {c(n)(m)}, and {e(n)(m)} each includes N × M elements, *n* belong to {1, ..., N}, m belong to {1, ..., M}, and N is a positive integer. An element c(n)(m) in {c(n)(m)} satisfies c(n)(m) = a(n)(m) × b(n) or c(n)(m) = a(n)(m) × B(n), where B(n) belongs to {B(n)} and {B(n)} is obtained by performing a Fourier transform on {b(n)}; and an element e(n)(m) in {e(n)(m)} satisfies e(n)(m) = c(n)(m) × d(m) or e(n)(m) = c(n)(m) × D(m), where D(m) belongs to {D(m)} and {D(m)} is obtained by performing a Fourier transform on {d(m)}.

Based on a possible implementation of the foregoing design, an element b(n) in {b(n)} satisfies

$$b(n) = e^{-j\frac{2\pi}{N}(\alpha_1 n^2 + \beta_1 n + \gamma_1)} \quad \text{or} \quad b(n) = e^{-j\frac{2\pi}{N}(\alpha_1 n^2 + \beta_1 n)}$$ ; and/or an element d(m) in $\{d(m)\}$ satisfies

$$d(m) = e^{-j\frac{2\pi}{M}(\alpha_2 m^2 + \beta_2 m + \gamma_2)} \quad \text{or} \quad d(m) = e^{-j\frac{2\pi}{M}(\alpha_2 m^2 + \beta_2 m)}$$ . Here, $\alpha_1$, $\beta_1$, $\gamma_1$, $\alpha_2$, $\beta_2$, and $\gamma_2$ are all real numbers.

Based on a possible implementation of the foregoing design, the second terminal device may further receive first information, where the first information may indicate at least one of $\alpha_1$, $\beta_1$, or $\gamma_1$, and/or the first information indicates at least one of $\alpha_2$, $\beta_2$, or $\gamma_2$. For example, the second terminal device may receive the first information from the first network device.

Based on a possible design of the third aspect or the fourth aspect, the fourth symbol may be obtained by performing an N-point Fourier transform on the fifth symbol; or the fourth symbol may be obtained by performing an M-point Fourier transform on the fifth symbol; or the fourth symbol may be obtained by performing both an N-point Fourier transform and an M-point Fourier transform on the fifth symbol. For example, the fourth symbol may be $\{a(n)(m)\}$, and the fifth symbol may be $\{h(n)(m)\}$, where $\{h(n)(m)\}$ includes N $\times$ M elements.

Based on a possible design of the third aspect or the fourth aspect, that the second communication apparatus (for example, the second network device or the second terminal device) processes the M first signals may be specifically: the second communication apparatus obtains K-bit information based on the M first signals, where K is one of 1, 2, 4, 6, 8, 10, 12, or 14.

Based on a possible design of the third aspect or the fourth aspect, that the M first signals are generated based on the second symbol may be specifically: the M first signals are signals obtained by performing an inverse Fourier transform on a third symbol, and the third symbol is determined based on the first coefficient, the second coefficient, and the second symbol. For example, the first coefficient may be $\{x(n)\}$, the second coefficient may be $\{y(m)\}$, the second symbol may be $\{e(n)(m)\}$, and the third symbol may be $\{f(n)(m)\}$, where $\{x(n)\}$ includes N elements, $\{y(m)\}$ includes M elements, $\{f(n)(m)\}$ includes N $\times$ M elements, and an element f(n)(m) in $\{f(n)(m)\}$ satisfies $f(n)(m) = e(n)(m) \times x(n) \times y(m)$.

An element $x(n)$ in $\{x(n)\}$ may satisfy a first characteristic, a second characteristic, a third characteristic, or a fourth characteristic; and/or an element $y(m)$ in $\{y(m)\}$ may satisfy a fifth characteristic, a sixth characteristic, a seventh characteristic, or an eighth characteristic.

For example, the first characteristic may be: when $n$ is less than $p$, $x(n)$ is less than $x(n + 1)$, and when $n$ is greater than $p$, $x(n)$ is less than or equal to $x(n - 1)$; the second characteristic may be: when $n$ is less than $p$, $x(n)$ is greater than $x(n + 1)$, and when $n$ is greater than $p$, $x(n)$ is greater than or equal to $x(n - 1)$; the third characteristic may be: when $n$ is less than $p1$, $x(n)$ is greater than $x(n + 1)$, when $n$ is greater than $p1$ and less than $p2$, $x(n)$ is greater than or equal to $x(n - 1)$, when $n$ is greater than $p2$ and less than $p3$, $x(n)$ is less than or equal to $(n - 1)$, and when $n$ is greater than $p3$, $x(n)$ is greater than or equal to $x(n - 1)$; the fourth characteristic may be: when $n$ is less than $p1$, $x(n)$ is less than $x(n + 1)$, when $n$ is greater than $p1$ and less than $p2$, $x(n)$ is less than or equal to $x(n - 1)$, when $n$ is greater than $p2$ and less than $p3$, $x(n)$ is greater than or equal to $(n - 1)$, and when $n$ is greater than $p3$, $x(n)$ is less than or equal to $x(n - 1)$; and $p$, $p1$, $p2$, and $p3$ are all integers greater than 1 and less than N.

For example, the fifth characteristic may be: when $m$ is less than $q$, $y(m)$ is less than $y(m + 1)$, and when $m$ is greater than $q$, $y(m)$ is less than or equal to $y(m - 1)$; the sixth characteristic may be: when $m$ is less than $q$, $y(m)$ is greater than $y(m + 1)$, and when m is greater than $q$, $y(m)$ is greater than or equal to $y(m - 1)$; the seventh characteristic may be: when m is less than $q1$, $y(m)$ is greater than $y(m + 1)$, when $m$ is greater than $q1$ and less than $q2$, $y(m)$ is greater than or equal to $y(m - 1)$, when $m$ is greater than $q2$ and less than $q3$, $y(m)$ is less than or equal to $(m - 1)$, and when $m$ is greater than $q3$, $y(m)$ is greater than or equal to $y(m - 1)$; the eighth characteristic may be: when m is less than $q1$, $y(m)$ is less than $y(m + 1)$, when $m$ is greater than $q1$ and less than $q2$, $y(m)$ is less than or equal to $y(m - 1)$, when $m$ is greater than $q2$ and less than $q3$, $y(m)$ is greater than or equal to $(m - 1)$, and when $m$ is greater than $q3$, $y(m)$ is less than or equal to $y(m - 1)$; and $q$, $q1$, $q2$, and $q3$ are all integers greater than 1 and less than M.

Based on a possible design of the third aspect or the fourth aspect, the $i^{th}$ first signal may be generated based on $\{e(n)(i)\}$ in $\{e(n)(m)\}$, and $\{e(n)(i)\}$ includes N elements.

According to a fifth aspect, this application further provides a communication apparatus. The communication apparatus is configured to perform the method according to any one of the first aspect, the second aspect, and the possible designs of the first aspect or the second aspect. The communication apparatus is, for example, a first communication apparatus, or a functional module in the first communication apparatus, for example, a baseband apparatus or a chip system.

In a possible design, the communication apparatus includes a baseband apparatus and a radio frequency apparatus.

In another possible design, the communication apparatus includes a processing module (also referred to as a processing unit sometimes) and a transceiver module (also referred to as a transceiver unit sometimes). The transceiver module can implement a sending function and a receiving function. When the transceiver module implements the sending function, the transceiver module may be referred to as a sending module (also referred to as a sending unit sometimes).

When the transceiver module implements the receiving function, the transceiver module may be referred to as a receiving module (also referred to as a receiving unit sometimes). The sending module and the receiving module may be a same functional module, the functional module is referred to as a transceiver module, and the functional module can implement the sending function and the receiving function. Alternatively, the sending module and the receiving module may be different functional modules, and the transceiver module is a general term for these functional modules.

According to a sixth aspect, this application further provides a communication apparatus. The communication apparatus is configured to perform the method according to any one of the third aspect, the fourth aspect, and the possible designs of the third aspect or the fourth aspect. The communication apparatus is, for example, a second communication apparatus, or a functional module in the second communication apparatus, for example, a baseband apparatus or a chip system.

In a possible design manner, the communication apparatus includes a baseband apparatus and a radio frequency apparatus.

In another possible design, the communication apparatus includes a processing module (also referred to as a processing unit sometimes) and a transceiver module (also referred to as a transceiver unit sometimes). The transceiver module can implement a sending function and a receiving function. When the transceiver module implements the sending function, the transceiver module may be referred to as a sending module (also referred to as a sending unit sometimes). When the transceiver module implements the receiving function, the transceiver module may be referred to as a receiving module (also referred to as a receiving unit sometimes). The sending module and the receiving module may be a same functional module, the functional module is referred to as a transceiver module, and the functional module can implement the sending function and the receiving function. Alternatively, the sending module and the receiving module may be different functional modules, and the transceiver module is a general term for these functional modules.

According to a seventh aspect, this application further provides a communication apparatus. The communication apparatus may include one or more processors. Optionally, the communication apparatus may further include a memory. The memory is configured to store one or more computer programs or instructions. The one or more processors are configured to execute the one or more computer programs or instructions stored in the memory, to enable the communication apparatus to perform the method according to any one of the first aspect, the second aspect, and the possible designs of the first aspect or the second aspect, or perform the method according to any one of the third aspect, the fourth aspect, and the possible designs of the third aspect or the fourth aspect.

According to an eighth aspect, this application further provides a communication system. The communication system includes one or more of the following: the communication apparatus according to the fifth aspect or the communication apparatus according to the sixth aspect.

According to a ninth aspect, this application further provides a computer-readable storage medium, where the computer-readable storage medium is configured to store a computer program or an instruction, and when the computer program or the instruction is run, the method according to any one of the first aspect, the second aspect, and the possible designs of the first aspect or the second aspect is implemented, or the method according to any one of the third aspect, the fourth aspect, and the possible designs of the third aspect or the fourth aspect is implemented.

According to a tenth aspect, this application further provides a computer program product including an instruction. When the computer program product is run on a computer, the method according to any one of the first aspect, the second aspect, and the possible designs of the first aspect or the second aspect is implemented, or the method according to any one of the third aspect, the fourth aspect, and the possible designs of the third aspect or the fourth aspect is implemented.

According to an eleventh aspect, this application further provides a chip system, including at least one processor, configured to read and execute a program instruction in a memory, to enable the chip system to implement the method according to any one of the first aspect, the second aspect, and the possible designs of the first aspect or the second aspect, or implement the method according to any one of the second aspect and the possible designs of the second aspect. Optionally, the chip system may include a chip, or may include a chip and another discrete component. This is not limited.

For technical effects that can be achieved in any one of the second aspect to the eleventh aspect and the possible design manners of the second aspect to the eleventh aspect, refer to the technical effects that can be achieved in any one of the first aspect and the possible designs of the first aspect. Details are not described herein again.

BRIEF DESCRIPTION OF DRAWINGS

FIG. 1 is a diagram of a network architecture of a communication system;
FIG. 2A to FIG. 2D are diagrams of sensing scenarios;
FIG. 3 is a schematic flowchart of a communication method according to an embodiment of this application;
FIG. 4 is a schematic flowchart of another communication method according to an embodiment of this application;

FIG. 5 is a schematic flowchart of another communication method according to an embodiment of this application;
FIG. 6 is a schematic flowchart of another communication method according to an embodiment of this application;
FIG. 7 is a schematic flowchart of still another communication method according to an embodiment of this application;
FIG. 8 is a diagram of a structure of a communication apparatus according to an embodiment of this application;
FIG. 9 is a diagram of a structure of another communication apparatus according to an embodiment of this application; and
FIG. 10 is a diagram of a structure of still another communication apparatus according to an embodiment of this application.

## DESCRIPTION OF EMBODIMENTS

To make objectives, technical solution, and advantages of embodiments of this application clearer, the following further describes embodiments of this application in detail with reference to the accompanying drawings.

A network architecture and a service scenario that are described in this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

In embodiments of this application, "a plurality of" may mean two or more. In view of this, in embodiments of this application, "a plurality of" may alternatively be understood as "at least two". "At least one" may be understood as one or more, for example, one, two, or more. For example, "including at least one" means including one, two, or more, for example, including at least one of A, B, and C. In this case, A, B, C, A and B, A and C, B and C, or A, B and C may be included. "And/or" describes an association relationship between associated objects and three relationships may specifically exist. For example, A and/or B may represent the following three cases: Only A exists, both A and B exist, and only B exists. In addition, the character "/" generally indicates an "or" relationship between the associated objects.

In addition, the terms "system" and "network" in embodiments of this application may be used interchangeably, and "according to" and "based on" may be used interchangeably.

Ordinal numerals such as "first" and "second" in embodiments of this application are used to distinguish between different objects, and are not intended to limit a sequence, a time sequence, a priority, or an importance degree of a plurality of objects. For example, a first communication apparatus and a second communication apparatus in embodiments of this application are used to distinguish the two communication apparatuses, but do not limit priorities, importance degrees, or the like of the two communication apparatuses.

Embodiments of this application are presented around a system including a plurality of devices, components, modules, and the like. It should be understood that the system may include other devices, components, modules, and the like that are not mentioned, or may include only some devices, components, modules, and the like that are mentioned in embodiments.

Communication systems to which embodiments of this application are applicable are first described below.

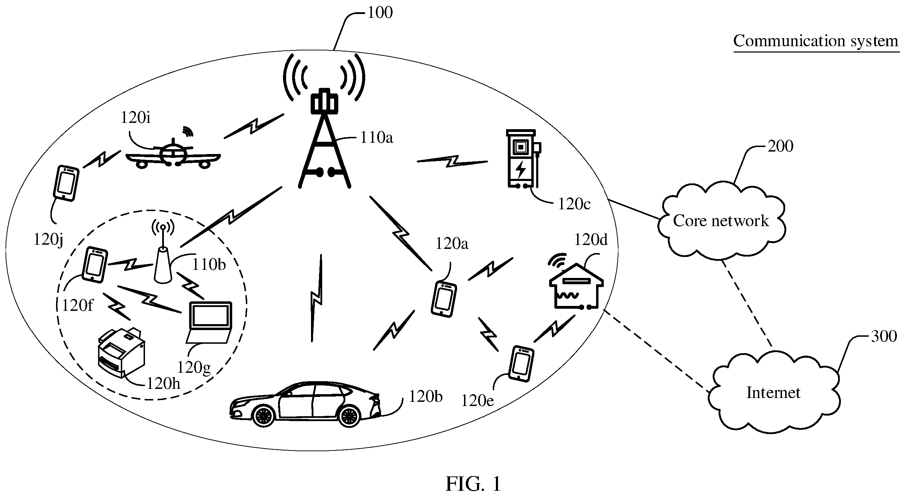

The technical solutions in embodiments of this application may be applied to various communication systems, for example, a universal mobile telecommunications system (universal mobile telecommunications system, UMTS), a wireless local area network (wireless local area network, WLAN), a short-range wireless communication system (for example, a sidelink (sidelink) system, a wireless fidelity (wireless fidelity, Wi-Fi) system, or a Bluetooth system), a wired network, a vehicle to everything (vehicle to everything, V2X) communication system, a device-to-device (device-to-device, D2D) communication system, and an Internet of Vehicles communication system, a 4th generation (4th generation, 4G) mobile communication system (for example, a long term evolution (long term evolution, LTE) system), an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) mobile communication system (for example, a new radio (NR) system), a future communication system (for example, a 6th generation (6th generation, 6G) mobile communication system), or another similar communication system. This is not limited. In embodiments of this application, a communication system shown in FIG. 1 is used as an example for description. When the technical solutions in embodiments of this application are applied to another communication system, a device, a component, a module, and the like in embodiments may be replaced with a corresponding device, component, and module in the another communication system. This is not limited.

FIG. 1 is a diagram of an architecture of a communication system to which an embodiment of this application is applied. As shown in FIG. 1, the communication system includes an access network 100 and a core network 200. Optionally, the communication system may further include an internet 300. The access network 100 may include at least one radio access network (radio access network, RAN) node, for example, 110a and 110b in FIG. 1, and may further include at least one terminal device, for example, 120a to 120j in FIG. 1. 110a is a base station, 110b is a micro base station, 120a, 120e, 120f, and 120j are mobile phones, 120b is a vehicle, 120c is a fuel dispenser, 120d is a home access point (home access point, HAP) deployed indoors or outdoors, 120g is a notebook computer, 120h is a printer, and 120i is an unmanned aerial vehicle. A same terminal device or network device may provide different functions in different application scenarios. For example, mobile phones in FIG. 1 include 120a, 120e, 120f, and 120j. The mobile phone 120a may access the base station 110a, be connected to the vehicle 120b, directly communicate with the mobile phone 120e, and access the HAP. The mobile phone 120b may access the HAP and directly communicate with the mobile phone 120a. The mobile phone 120f may access the micro base station 110b, be connected to the notebook computer 120g, and be connected to the printer 120h. The mobile phone 120j may control the unmanned aerial vehicle 120i.

The network device is a network side device having a wireless transceiver function. The network device may be an apparatus that is in a radio access network (radio access network, RAN) and that provides a wireless communication function for the terminal device, and is referred to as a RAN device. The RAN may be an access network in the 3rd generation partnership project (3rd generation partnership project, 3GPP), for example, a 4G network, a 5G network, or a future-oriented 6G network. Alternatively, the RAN may be an open radio access network (open RAN, O-RAN, or ORAN), a cloud radio access network (cloud radio access network, CRAN), or a communication network of two or more of the foregoing networks.

The RAN device may also be a base station (base station), an evolved base station (evolved NodeB, eNodeB), a transmission reception point (transmission reception point, TRP), a next generation base station (next generation NodeB, gNB) in a 5G mobile communication system, a base station in a 6G mobile communication system, a base station in a future mobile communication system, an access node in a Wi-Fi system, or the like.

The RAN device may alternatively be a module or unit that completes a part of functions of the base station, for example, a central unit (central unit, CU), a distributed unit (distributed unit, DU), or a radio unit (radio unit, RU). The CU herein implements functions of the radio resource control protocol and the packet data convergence protocol (packet data convergence protocol, PDCP) of the base station, and may further implement functions of the service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, refer to technical specifications related to the 3rd generation partnership project (3rd generation partnership project, 3GPP). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may alternatively have different names, but a person skilled in the art may understand meanings of the names. For example, in an ORAN system, the CU may also be referred to as an O-CU (open CU), the DU may also be referred to as an O-DU, and the RU may also be referred to as an O-RU. Any one of the CU (or the CU-CP or the CU-UP), the DU, and the RU in this application may be implemented by using a software module, a hardware module, or a combination of a software module and a hardware module. The network device may be a macro base station (for example, 110a in FIG. 1), or may be a micro base station or an indoor base station (for example, 110b in FIG. 1), or may be a relay node, a donor node, or the like. A specific technology and a specific device form that are used for the network device are not limited in embodiments of this application.

In embodiments of this application, the function of the network device may alternatively be performed by a module (for example, a chip) in the network device, or may be performed by a control subsystem including the function of the network device. The control subsystem including the function of the network device herein may be a control center in the foregoing application scenarios such as smart grid, industrial control, smart transportation, and smart city.

The terminal device is a user-side device having a wireless transceiver function. The terminal device may also be referred to as a terminal, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, self-driving, telemedicine, a smart grid, smart furniture, a smart office, a smart wearable, smart transportation, and a smart city. The terminal device may be a mobile phone, a tablet computer, a computer having a wireless transceiver function, a wearable device, a vehicle, an unmanned aerial machine, a helicopter, an airplane, a ship, a robot, a robotic arm, a smart home device, or the like. In embodiments of this application, an apparatus configured to implement a function of the terminal device may be the terminal device, or may be an apparatus that can support the terminal device in implementing the function, for example, a chip system or a combined device or component that can implement a function of the terminal device. The apparatus may be installed in the terminal device. A specific technology and a specific device form that are used by the terminal device are not limited in embodiments of this application.

In embodiments of this application, the function of the terminal device may alternatively be performed by a module (for example, a chip or a modem) in the terminal device, or may be performed by an apparatus including a function of the terminal device.

The network device and the terminal device may be fixed at a location, or may be movable. The network device and the terminal device may be deployed on land, including an indoor device, an outdoor device, a handheld device, or a vehicle-mounted device; may be deployed on the water; or may be deployed on an aircraft, a balloon, and a satellite in the air. Application scenarios of the network device and the terminal device are not limited in embodiments of this application.

Roles of the network device and the terminal device may be relative. For example, the helicopter or unmanned aerial vehicle 120i in FIG. 1 may be configured as a mobile network device. For the terminal device 120j that accesses the radio access network 100 via 120i, the terminal device 120i is a network device. However, for the network device 110a, 120i is a terminal device, that is, 110a and 120i communicate with each other by using a radio air interface protocol. Certainly, 110a and 120i may alternatively communicate with each other by using an interface protocol between network devices. In this case, compared with 110a, 120i is also a network device. Therefore, both the network device and the terminal device may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal device.

Communication between a network device and a terminal device, between network devices, and between terminal devices may be performed by using a licensed spectrum, or may be performed by using an unlicensed spectrum, or may be performed by using both a licensed spectrum and an unlicensed spectrum. This is not limited.

In this embodiment of this application, a transmitting device is a transmit end of a sensing signal, and a receiving device is a receive end of an echo signal of the sensing signal. It may be understood that roles of the transmitting device and the receiving device may be interchanged, that is, the transmitting device also has a receiving capability, and the receiving device also has a sending capability. For example, the transmitting device may be a network device in FIG. 1, and the receiving device may be a terminal device in FIG. 1; or the transmitting device may be a terminal device in FIG. 1, and the receiving device may be a network device in FIG. 1; or the transmitting device and the receiving device are network devices in FIG. 1; or the transmitting device and the receiving device are terminal devices in FIG. 1. This is not limited.

The following describes technical features in embodiments of this application.

A sensing technology may be usually categorized into two types of modes: monostatic sensing and bistatic sensing. The monostatic sensing mode means that a transmitting device of a sensing signal and a receiving device of an echo signal of the sensing signal are a same device. In other words, in the monostatic sensing mode, the transmitting device needs to send a sensing signal and receive an echo signal that is of the sensing signal and that is reflected from a surface of a target. Therefore, the monostatic sensing mode may also be referred to as a self-sending and self-receiving mode. This is not limited. The bistatic sensing mode means that a sending end device of a sensing signal and a receiving end device of an echo signal of the sensing signal are two different devices. In other words, a sensing station A sends a sensing signal, and an echo signal that is of the sensing signal and that is reflected from a surface of a target is received by a sensing station B. Therefore, the bistatic sensing mode may also be referred to as an A-sending and B-receiving mode.

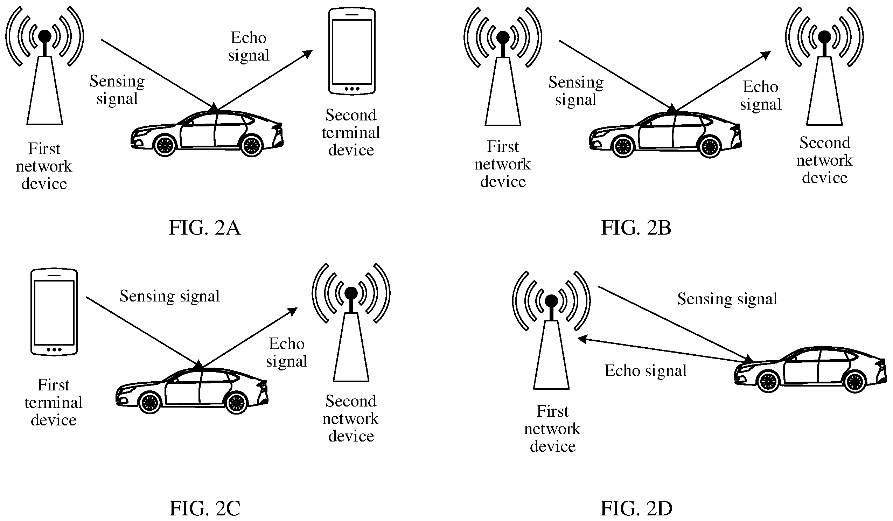

FIG. 2A to FIG. 2D show examples of diagrams of sensing scenarios to which an embodiment of this application is applicable. FIG. 2A to FIG. 2D provide four sensing scenarios to which an embodiment of this application is applicable. The four sensing scenarios are respectively a scenario in which a first network device sends a sensing signal and a second terminal device receives an echo signal, as shown in FIG. 2A, a scenario in which a first network device sends a sensing signal and a second network device receives an echo signal, as shown in FIG. 2B, a scenario in which a first terminal device sends a sensing signal and a second network device receives an echo signal, as shown in FIG. 2C, and a scenario in which a first network device performs self-sending and self-receiving, as shown in FIG. 2D.

It should be noted that, in FIG. 2A to FIG. 2D, an example in which a to-be-sensed target is a vehicle is used. However, this embodiment of this application is not limited thereto. For example, the to-be-sensed target may alternatively be a pedestrian, a low-altitude unmanned aerial vehicle, or another moving or static object. In FIG. 2A to FIG. 2D, an example in which a terminal device is a smartphone is used. This embodiment of this application is not limited thereto either.

Currently, orthogonal frequency division multiplexing (orthogonal frequency division multiplexing, OFDM) waveform technology is usually used for a communication signal. OFDM enables the construction of orthogonal subcarriers in the frequency domain, allowing different modulation symbols to be mapped to these orthogonal subcarriers and transmitted simultaneously. However, when applied to integrated sensing and communication scenarios, the performance of OFDM fall significantly short of the ideal performance of sensing.

In view of this, embodiments of this application provide a communication method and apparatus to improve performance of communication and sensing integration. The method and the apparatus in this application are based on a same technical concept. Because problem-resolving principles of the method and the apparatus are similar, mutual reference may be made to implementation of the apparatus and the method, and repeated parts are not described.

The following first describes technical terms in embodiments of this application.

A first communication apparatus may be configured to generate M first signals and send the M first signals, and may be a network device or a component (for example, a DU) in the network device, or may be a terminal device or a component in the terminal device. This is not limited. For example, the first communication apparatus may be the first network device shown in any one of FIG. 2A, FIG. 2B, or FIG. 2D, or a component in the first network device. This is not limited. For another example, the first communication apparatus may alternatively be the first terminal device shown in FIG. 2C, or a component in the first terminal device. This is not limited. M is a positive integer.

In an implementation, the first communication apparatus may be further configured to receive echo signals of the M first signals. For example, the first communication apparatus may be the first network device shown in FIG. 2D, or a component in the first network device. This is not limited.

A second communication apparatus may be configured to receive the M first signals, and may be a network device or a component (for example, a DU) in the network device, or may be a terminal device or a component in the terminal device. This is not limited. For example, the second communication apparatus may alternatively be the second terminal device shown in FIG. 2A, or a component in the second terminal device. This is not limited. For another example, the second communication apparatus may be the second network device shown in FIG. 2B or FIG. 2C, or a component in the second network device. This is not limited.

For descriptions of the network device and the terminal device, refer to related content shown in FIG. 1. Details are not described herein again.

A symbol may also be referred to as a modulation symbol (modulation symbols), a symbol group, a modulation symbol sequence, a modulation symbol stream, a modulation symbol string, a modulation symbol set, or the like. This is not limited. A symbol in embodiments of this application may be represented as a complex number, including a real part and an imaginary part. This is not limited. For example, the symbol may be represented as $a + j * b$, where $a$ is a real part, b is an imaginary part, and $j = \sqrt{-1}$. In embodiments of this application, a modulation scheme of a symbol may be quadrature phase shift keying (quadrature phase shift keying, QPSK), or may be 16-order quadrature amplitude modulation (quadrature amplitude modulation, QAM), or may be 64-order QAM, or may be 256-order QAM, or may be 1024-order QAM, or the like. It should be understood that a modulation scheme of a symbol is not limited in embodiments of this application.

A sequence may include one or more elements, and each element may be represented as a complex number. The sequence may also be referred to as a parameter, a factor, or the like. This is not limited.

A coefficient may include one or more elements, and each element may be represented as a real number or may be represented as a complex number. The coefficient may also be referred to as a parameter, a factor, or the like. This is not limited.

A time unit may be one or more symbols, or may be one or more slots, or may be one or more mini-slots (mini-slots), or may be one or more subframes, or may be one or more frames. Time domain granularity is not limited in embodiments of this application. A plurality of time units may be temporally consecutive, or may be discrete. This is not limited.

Embodiment of this application use a numbering manner in which a start number is 1 and a step is increased by 1 as an example, but are not limited thereto. For example, the numbering manner may alternatively be: a start number is 0 and a step is increased by 1. For another example, the numbering manner may alternatively be: a start number is X and a step is decreased by 1, where X is an integer greater than 1.

"{.}" and "[·]" may be used interchangeably, may be used to represent a plurality of elements, and may be understood as a set, a group, a sequence, or the like. This is not limited.

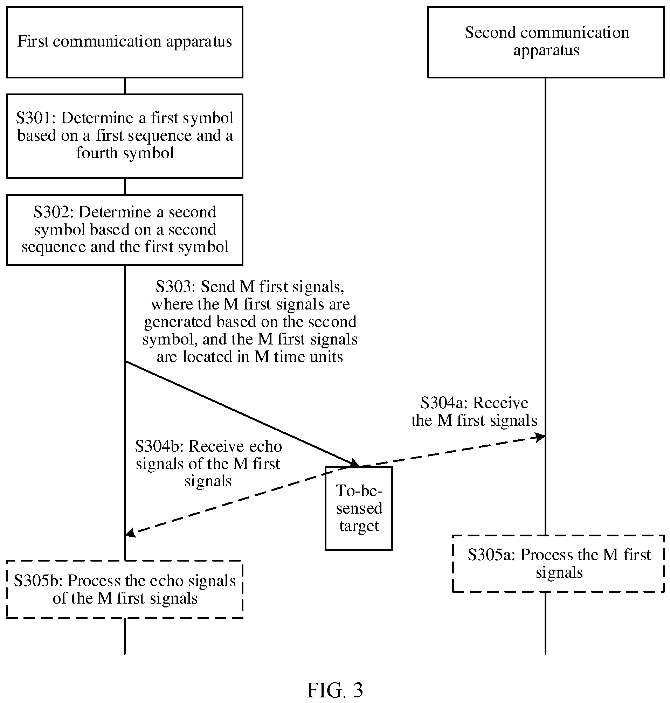

FIG. 3 shows an example of a schematic flowchart of a communication method according to an embodiment of this application. As shown in FIG. 3, the method may include the following content.

S301: A first communication apparatus determines a first symbol based on a first sequence and a fourth symbol.

Alternatively, S301 may be described as follows: A first communication apparatus processes a fourth symbol based on a first sequence to obtain a first symbol.

The first sequence may include N elements, and each element may be represented as a complex number. For example, the first sequence may be denoted as *{b(n)}*. *{b(n)}* includes N elements. N is a positive integer. *n* belongs to {1, ..., N}, that is, $n \in \{1, ..., N\}$. "..." in {1, . . . , N} indicates a positive integer between 1 and N. For example, when N=5, $n \in \{1, 2, 3, 4, 5\}$. The N elements in *{b(n)}* may be respectively b(1), ..., and *b(N)*. In other words, an $n^{th}$ element in *{b(n)}* may be *b(n)*. In an implementation, *{b(n)}* includes N complex numbers, and modulus values of the N complex numbers may be equal, that is, *{b(n)}* is a constant modulus sequence.

In an example, an element b(n) in *{b(n)}* satisfies $b(n) = e^{-j\frac{2\pi}{N}(\alpha_1 n^2 + \beta_1 n + \gamma_1)}$ or $b(n) = e^{-j\frac{2\pi}{N}(\alpha_1 n^2 + \beta_1 n)}$. A specific implementation form of *{b(n)}* is not limited in this embodiment of this application. Here, e is a natural constant and is an infinite non-recurring decimal, and $\alpha_1$, $\beta_1$, and $\gamma_1$ are all real numbers.

The fourth symbol may be N symbol groups, and each symbol group includes M elements. Conversely, the fourth symbol may be M symbol groups, and each symbol group includes N elements. This is not limited. In other words, the fourth symbol may include $N \times M$ elements. Each of the $N \times M$ elements may be represented as a complex number. For example, the fourth symbol may be denoted as {*a(n)(m)*}, and {*a(n)(m)*} includes N × M elements. M is a positive integer. m belongs to {1, ..., M}, that is, $m \in \{1, \ldots, M\}$. "..." in {1, . . . , M} indicates a positive integer between 1 and M. For example, when M=4, $m \in \{1, 2, 3, 4\}$. For descriptions of n and N, refer to content of the first sequence. Details are not described again. The N × M elements in {*a(n)(m)*} may be respectively: *a*(1)(1), *..., a*(1)(M), *a*(2)(1), ..., *a*(2)(M), *..., a*(N)(1), ..., and *a*(N)(M). In other words, an m<sup>th</sup> symbol in an n<sup>th</sup> symbol group in {*a(n)(m)*} may be *a(n)(m)*.

The first symbol may be N symbol groups, and each symbol group includes M elements. In other words, the first symbol may be M symbol groups, and each symbol group includes N elements. This is not limited. In other words, the first symbol may include N × M elements. Each of the N × M elements may be represented as a complex number. For example, the first symbol may be denoted as {*c(n)(m)*}, and {*c(n)(m)*} includes N × M elements. The N × M elements in {*c(n)(m)*} may be respectively: c(1)(1), ..., *c*(1)(M), *c*(2)(1), ..., *c*(2)(M), ..., *c*(N)(1), ..., and *c*(N)(M). In other words, an m<sup>th</sup> symbol in an n<sup>th</sup> symbol group in {*c(n)(m)*} may be *c(n)(m)*. For descriptions of n, m, N, and M, refer to the foregoing content. Details are not described again.

Correspondingly, in S301, that the first communication apparatus determines the first symbol based on the first sequence and the fourth symbol may be rephrased as: The first communication apparatus determines {*c(n)(m)*} based on {*b(n)*} and {*a(n)(m)*}; or, the first communication apparatus processes {*a(n)(m)*} based on {*b(n)*} to obtain {*c(n)(m)*}.

In an implementation, an element c(n)(m) in {*c(n)(m)*} satisfies $c(n)(m) = a(n)(m) \times b(n)$ or $c(n)(m) = a(n)(m) \times B(n)$. Here, *B(n)* belongs to {*B(n)*}, that is, *B(n)* is an n<sup>th</sup> element in {*B(n)*}. {*B(n)*} includes N elements, which may be respectively *B*(1)*, ...,* and *B*(N).

{*B(n)*} may be obtained by performing a Fourier transform on {*b(n)*}. For example, an element *B(k)* in {*B(n)*} may satisfy the following formula (1):

$$B(k) = \frac{1}{\sqrt{N}} \sum_{n=1}^{N} b(n) e^{j2\pi \frac{n}{N} k} \qquad (1)$$

*B(k)* is a k<sup>th</sup> element in {*B(n)*}, and *k* belongs to {1, ..., N}, that is, $k \in \{1,..., N\}$. $\sum \cdot$ is a sum operation, and e is a natural constant.

It should be noted that a value of a variable n in the formula (1) may be an integer from 1 to N. In another implementation, the value of n may alternatively be an integer from 0 to N-1, and correspondingly, *b(n)* is an (n+1)<sup>th</sup> element in {*b(n)*}. Similarly, a value of a variable *k* may also be an integer from 0 to N-1, and correspondingly, *B(k)* is a (k+1)<sup>th</sup> element in {*B(n)*}.

In an implementation, the fourth symbol may be obtained by performing a Fourier transform on a fifth symbol. The fifth symbol may be N symbol groups, and each symbol group includes M elements. In other words, the fourth symbol may be M symbol groups, and each symbol group includes N elements. This is not limited. In other words, the fourth symbol may include N × M elements. Each of the N × M elements may be represented as a complex number. For example, the fifth symbol may be denoted as {*h(n)(m)*}, and {*h(n)(m)*} includes N × M elements. The N × M elements in {*h(n)(m)*} may be respectively: h(1)(1), *...,* h(1)(M), h(2)(1), *...,* h(2)(M), *...,* h(N)(1), *...,* and h(N)(M). In other words, an m<sup>th</sup> symbol in an n<sup>th</sup> symbol group in {*h(n)(m)*} may be h(n)(m). For descriptions of n, m, N, and M, refer to content of the fourth symbol. Details are not described again.

For example, at least one element in {*h(n)(m)*} is determined based on K-bit information. Optionally, a remaining element in {*h(n)(m)*} other than the at least one element may be obtained by adding zeros. This is not limited. K may be an even number such as 1, 2, 4, 6, 8, 10, 12, 14, 16, 18, or 20. This is not limited. For example, K may be one of 1, 2, 4, 6, or 8, or may be one of 1, 2, 4, 6, 8, or 10, or may be one of 1, 2, 4, 6, 8, 10, or 12, or may be one of 1, 2, 4, 6, 8, 10, 12, or 14.

In an example, {*a(n)(m)*} may be obtained by performing an N-point Fourier transform on {h(n)(m)}. For example, an element a(n)(m) in {*a(n)(m)*} satisfies $a(n)(m) = \frac{1}{\sqrt{N}} \sum_{p=1}^{N} h(p)(m) e^{j2\pi \frac{p}{N} n}$.

In another example, {*a(n)(m)*} may be obtained by performing an M-point Fourier transform on {h(n)(m)}. For example, an element a(n)(m) in {*a(n)(m)*} satisfies $a(n)(m) = \frac{1}{\sqrt{M}} \sum_{q=1}^{M} h(n)(q) e^{j2\pi \frac{q}{M} m}$.

In still another example, {*a(n)(m)*} may be obtained by performing both an N-point Fourier transform and an M-point Fourier transform on {*h(n)(m)*}. For example, an element a(n)(m) in {*a(n)(m)*} satisfies

$$a(n)(m) = \frac{1}{\sqrt{NM}} \sum_{q=1}^{M} \sum_{p=1}^{N} h(p)(q) e^{j2\pi \frac{p}{N} n} e^{j2\pi \frac{q}{M} m}.$$

$\sum \cdot$ is a sum operation, and e is a natural constant. p belongs to {1, ..., N}, that is, $p \in \{1, \ldots, N\}$. q belongs to {1, ..., M}, that is, $q \in \{1,..., M\}$. Correspondingly, h(p)(m) is an m<sup>th</sup> symbol in a p<sup>th</sup> group of symbols in {*h(n)(m)*}. h(n)(q) is a q<sup>th</sup> symbol in an n<sup>th</sup> group of symbols in {*h(n)(m)*}. h(p)(q) is a q<sup>th</sup> symbol in a p<sup>th</sup> group of symbols in {*h(n)(m)*}.

It should be noted that a value of a variable *p* in the foregoing three examples may be an integer from 1 to N. In another implementation, the value of *p* may alternatively be an integer from 0 to N-1. This is not limited. A value of a variable *q* in the foregoing three examples may be an integer from 1 to M. In another implementation, the value of *q* may alternatively be an integer from 0 to M-1. This is not limited. Similarly, the value of the variable n may also be an integer from 0 to N-1, and the value of the variable *m* may also be an integer from 0 to M-1. Correspondingly, *a*(*n*)(*m*) may be a (m + 1)th symbol in a (*n* + 1)th group of symbols in {*a*(*n*)(*m*)}, *h(p)(m)* may be a (m + 1) th symbol in a (*p* + 1) th group of symbols in {*h*(*n*)(*m*)}, *h*(*n*)(*q*) may be a (*q* + 1)th symbol in a (*n* + 1)th group of symbols in {*h*(*n*)(*m*)}, and *h*(*p*)(*q*) may be a (*q* + 1)th symbol in a (*p* + 1)th group of symbols in {*h*(*n*)(*m*)}.

In another possible implementation, at least one element in the fourth symbol may also be determined based on K-bit information. In other words, the fourth symbol may alternatively be the fifth symbol, that is, {*a*(*n*)(*m*)} may be {*h*(*n*)(*m*)}. For descriptions of K and {*h*(*n*)(*m*)}, refer to the foregoing content. Details are not described again. Optionally, a remaining element in the fourth symbol other than the at least one element may be obtained by adding zeros. This is not limited.

It should be noted that for each technical term in embodiments of this application, such as the first communication apparatus, the second communication apparatus, the symbol, the complex number, or the sequence, refer to the foregoing content. Details are not described herein again.

S302: The first communication apparatus determines a second symbol based on a second sequence and the first symbol.

Alternatively, S302 may be expressed as follows: The first communication apparatus processes the first symbol based on a second sequence to obtain a second symbol.

The second sequence may include M elements, and each element may be represented as a complex number. For example, the second sequence may be denoted as {*d*(*m*)}. {*d*(*m*)} includes M elements. For m and M, refer to the foregoing content. Details are not described again. The M elements in {*d*(*m*)} may be respectively *d*(1), ..., and *d*(*M*). In other words, an mth element in {*d*(*m*)} may be *d*(*m*). In an implementation, {*d*(*m*)} includes M complex numbers, and modulus values of the M complex numbers may be equal, meaning {*d*(*m*)} is a constant modulus sequence.

In an example, an element d(m) in {*d*(*m*)} satisfies $d(m) = e^{-j\frac{2\pi}{M}(\alpha_2 m^2 + \beta_2 m + \gamma_2)}$ or

$d(m) = e^{-j\frac{2\pi}{M}(\alpha_2 m^2 + \beta_2 m)}$. A specific implementation form of {*d*(*m*)} is not limited in this embodiment of this application. Here, e is a natural constant and is an infinite non-recurring decimal, and $\alpha_2$, $\beta_2$, and $\gamma_2$ are all real numbers.

The second symbol may be N symbol groups, and each symbol group includes M elements. Conversely, the second symbol may be M symbol groups, and each symbol group includes N elements. This is not limited. In other words, the second symbol may include N × M elements. Each of the N × M elements may be represented as a complex number. For example, the second symbol may be denoted as {*e*(*n*)(*m*)}, and {*e*(*n*)(*m*)} includes N × M elements. The N × M elements in {*e*(*n*)(*m*)} may be respectively: *e*(1)(1), ..., *e*(1)(*M*), *e*(2)(1), ..., *e*(2)(*M*), ..., *e*(*N*)(1), ..., and *e*(*N*)(*M*). In other words, an mth symbol in an nth symbol group in {*e*(*n*)(*m*)} may be *e*(*n*)(*m*). For descriptions of n, m, N, and M, refer to the foregoing content. Details are not described again.

Correspondingly, in S302, that the first communication apparatus determines the second symbol based on the second sequence and the first symbol may be rephrased as: The first communication apparatus determines {*e*(*n*)(*m*)} based on {*d*(*m*)} and {*c*(*n*)(*m*)}; or, the first communication apparatus processes {*c*(*n*)(*m*)} based on {*d*(*m*)} to obtain {*e*(*n*)(*m*)}.

In an implementation, an element e(n)(m) in {*e*(*n*)(*m*)} satisfies *e*(*n*)(*m*) = *c*(*n*)(*m*) × *d*(*m*). Alternatively, in another implementation, an element e(n)(m) in {*e*(*n*)(*m*)} satisfies *e*(*n*)(*m*) = *c*(*n*)(*m*) × *D*(*m*). Here, *D*(*m*) belongs to {*D*(*m*)}, that is, *D*(*m*) is an mth element in {*D*(*m*)}. {*D*(*m*)} includes M elements, which may be respectively *D*(1), ..., and *D*(*M*).

{*D*(*m*)} may be obtained by performing a Fourier transform on {*d*(*m*)}. For example, an element *B*(*g*) in {*D*(*m*)} may satisfy the following formula (2):

$$D(g) = \frac{1}{\sqrt{M}} \sum_{m=1}^{M} d(m) e^{j2\pi \frac{m}{M} g} \qquad (2)$$

*B*(*g*) is a gth element in {*B*(*n*)}, and *g* belongs to {1, ..., M}, that is, $g \in \{1, \cdots, M\}$. $\sum \cdot$ is a sum operation, and e is a natural constant.

It should be noted that a value of a variable *m* in the formula (2) may be an integer from 1 to M. In another implementation, the value of *m* may be an integer from 0 to M-1, and correspondingly, *d*(*m*) may be an (*m* + 1)th element in {*D*(*m*)}. Similarly, a value of a variable *g* may also be an integer from 0 to M-1, and correspondingly, *B*(*g*) may be a (*g* + 1)th element in {*B*(*n*)}.

It should be noted that the first communication apparatus may first determine the first symbol based on the first sequence and the fourth symbol, and then determine the second symbol based on the second sequence and the first symbol. Alternatively, the first communication apparatus may determine the second symbol directly based on the first sequence, the second sequence, and the fourth symbol. In other words, S301 and S302 may be combined into one step. This is not limited.

S303: The first communication apparatus sends M first signals.

The M first signals are located in M time units, and an $i^{th}$ first signal among the M first signals is located in an $i^{th}$ time unit among the M time units. *i* is a positive integer less than or equal to M. In other words, the first communication apparatus sends the M first signals in the M time units. For example, the first communication apparatus maps the M first signals to the M time units for sending.

The M first signals are generated based on the second symbol. In other words, the M first signals are signals generated based on {$e(n)(m)$}. The $i^{th}$ first signal among the M first signals may be a signal generated based on {$e(n)(i)$} in {$e(n)(m)$}. {$e(n)(i)$} includes N elements, and may be respectively $e(1)(i)$, ..., and $e(N)(i)$. In other words, the $i^{th}$ time unit among the M time units may be used to carry $e(1)(i)$, ..., and $e(N)(i)$. For example, the first communication apparatus may process the second symbol based on a first coefficient and/or a second coefficient to obtain a third symbol, and generate the M first signals based on the third symbol. For example, the first communication apparatus may perform an inverse Fourier transform on the third symbol to obtain the M first signals.

The first coefficient may include N elements, for example, denoted as {$x(n)$}. {$x(n)$} includes N elements. For n and N, refer to the foregoing content. Details are not described again. The N elements in {$x(n)$} may be respectively $x(1)$, ..., and $x(N)$. In other words, an $n^{th}$ element in {$x(n)$} may be $x(n)$.

The second coefficient may include M elements, for example, denoted as {$y(m)$}. {$y(m)$} includes M elements. For m and M, refer to the foregoing content. Details are not described again. The M elements in {$y(m)$} may be respectively $y(1)$, ..., and $y(M)$. In other words, an $m^{th}$ element in {$y(m)$} may be $y(m)$.

The third symbol may be N symbol groups, and each symbol group includes M elements. In other words, the third symbol may be M symbol groups, and each symbol group includes N elements. This is not limited. In other words, the third symbol may include N $\times$ M elements. Each of the N $\times$ M elements may be represented as a complex number. For example, the third symbol may be denoted as {$f(n)(m)$}, and {$f(n)(m)$} includes N $\times$ M elements. The N $\times$ M elements in {$f(n)(m)$} may be respectively: $f(1)(1)$, ..., $f(1)(M)$, $f(2)(1)$, ..., $f(2)(M)$, ..., $f(N)(1)$, ..., and $f(N)(M)$. In other words, an $m^{th}$ symbol in an $n^{th}$ symbol group in {$f(n)(m)$} may be $f(n)(m)$. For descriptions of n, m, N, and M, refer to the foregoing content. Details are not described again.

In an example, the first communication apparatus may process the second symbol based on the first coefficient to obtain the third symbol; or in other words, the first communication apparatus may determine the third symbol based on the first coefficient and the second symbol; or in other words, the first communication apparatus may process {$e(n)(m)$} based on {$x(n)$} to obtain {$f(n)(m)$} ; or in other words, the first communication apparatus may determine {$f(n)(m)$} based on {$x(n)$} and {$e(n)(m)$}. For example, an element f(n)(m) in {$f(n)(m)$} satisfies $f(n)(m) = e(n)(m) \times x(n)$.

In another example, the first communication apparatus may process the second symbol based on the second coefficient to obtain the third symbol; or in other words, the first communication apparatus may determine the third symbol based on the second coefficient and the second symbol; or in other words, the first communication apparatus may process {$e(n)(m)$} based on {$y(m)$} to obtain {$f(n)(m)$}; or in other words, the first communication apparatus may determine {$f(n)(m)$} based on {$y(m)$} and {$e(n)(m)$}. For example, an element f(n)(m) in {$f(n)(m)$} satisfies $f(n)(m) = e(n)(m) \times y(m)$.

In still another example, the first communication apparatus may process the second symbol based on the first coefficient and the second coefficient to obtain the third symbol; or in other words, the first communication apparatus may determine the third symbol based on the first coefficient, the second coefficient, and the second symbol; or in other words, the first communication apparatus may process {$e(n)(m)$} based on {$x(n)$} and {$y(m)$} to obtain {$f(n)(m)$}; or in other words, the first communication apparatus may determine {$f(n)(m)$} based on {$x(n)$}, {$y(m)$}, and {$e(n)(m)$}. For example, an element f(n)(m) in {$f(n)(m)$} satisfies $f(n)(m) = e(n)(m) \times x(n) \times y(m)$.

Correspondingly, that the first communication apparatus may perform an inverse Fourier transform on the third symbol to obtain the M first signals may be alternatively expressed as follows: The first communication apparatus may perform an inverse Fourier transform on {$f(n)(m)$} to obtain the M first signals. For example, assuming that the $m^{th}$ first signal among the M first signals is denoted as $s(t, m)$, $s(t, m)$ may satisfy the following formula (3):

$$s(t,m) = \sum_{n=1}^{N} f(n)(m)e^{j2\pi(n-\Delta n)\Delta f(t-\Delta t)} \tag{3}$$

*t* may be time. *n* is an index of a subcarrier, *N* is a quantity of subcarriers, and $\Delta f$ is a subcarrier spacing. $\Delta n$ and $\Delta t$ are both pre-determined parameters.

It should be noted that a value of the variable n in the formula (3) may be an integer from 1 to N. In another implementation, the value of n may alternatively be an integer from 0 to N-1. This is not limited. Similarly, a value of m may also be an integer from 0 to M-1. Correspondingly, $f(n)(m)$ may be a $(m + 1)^{th}$ symbol in a $(n + 1)^{th}$ group of symbols in {$f(n)(m)$}.

In a possible implementation, the first coefficient, that is, {$x(n)$} may satisfy a first characteristic, or may satisfy a second characteristic, or may satisfy a third characteristic, or may satisfy a fourth characteristic. This is not limited.

For example, the first characteristic may be: when *n* is less than *p*, $x(n)$ is less than $x(n + 1)$, and when *n* is greater than $p$, $x(n)$ is less than or equal to $x(n-1)$. For example, N is an odd number, and the first characteristic may be: when $n$ is less than $p$, $x(n)$ is less than $x(n+1)$, and when $n$ is greater than $p$, $x(n)$ is less than $x(n-1)$. For example, N is 11, and $p$ is 6. If elements in $\{x(n)\}$ satisfy the first characteristic, the 11 elements in $\{x(n)\}$ may be {0.3, 0.35, 0.4, 0.45, 0.5, 0.55, 0.5, 0.45, 0.4, 0.35, 0.3}. For example, N is 21, and $p$ is 11. If elements in $\{x(n)\}$ satisfy the first characteristic, the 21 elements in $\{x(n)\}$ may be {0.3, 0.35, 0.4, 0.45, 0.5, 0.55, 0.6, 0.65, 0.7, 0.75, 0.8, 0.75, 0.7, 0.65, 0.6, 0.55, 0.5, 0.45, 0.4, 0.35, 0.3}.

For another example, N is an even number, and the first characteristic may be: when $n$ is less than $p$, $x(n)$ is less than $x(n+1)$, and when $n$ is greater than $p$, $x(n)$ is less than or equal to $x(n-1)$. For example, N is 10, and $p$ is 5. If elements in $\{x(n)\}$ satisfy the first characteristic, the 10 elements in $\{x(n)\}$ may be {0.3, 0.35, 0.4, 0.45, 0.5, 0.5, 0.45, 0.4, 0.35, 0.3}. For example, N is 20, and $p$ is 10. If elements in $\{x(n)\}$ satisfy the first characteristic, the 20 elements in $\{x(n)\}$ may be {0.3, 0.35, 0.4, 0.45, 0.5, 0.55, 0.6, 0.65, 0.7, 0.75, 0.75, 0.7, 0.65, 0.6, 0.55, 0.5, 0.45, 0.4, 0.35, 0.3}.

For example, the second characteristic may be: when $n$ less than $p$, $x(n)$ is greater than $x(n+1)$, and when $n$ is greater than $p$, $x(n)$ is greater than or equal to $x(n-1)$. For example, N is an odd number, and the second characteristic may be: when $n$ is less than $p$, $x(n)$ is greater than $x(n+1)$, and when $n$ is greater than $p$, $x(n)$ is greater than $x(n-1)$. For example, N is 11, and $p$ is 6. If elements in $\{x(n)\}$ satisfy the second characteristic, the 11 elements in $\{x(n)\}$ may be {0.55, 0.5, 0.45, 0.4, 0.35, 0.3, 0.35, 0.4, 0.45, 0.5, 0.55}. For example, N is 21, and p is 11. If elements in $\{x(n)\}$ satisfy the second characteristic, the 21 elements in $\{x(n)\}$ may be {0.8, 0.75, 0.7, 0.65, 0.6, 0.55, 0.5, 0.45, 0.4, 0.35, 0.3, 0.35, 0.4, 0.45, 0.5, 0.55, 0.6, 0.65, 0.7, 0.75, 0.8}.

For another example, N is an even number, and the second characteristic may be: when $n$ is less than $p$, $x(n)$ is greater than $x(n+1)$, and when $n$ is greater than $p$, $x(n)$ is greater than or equal to $x(n-1)$. For example, N is 10, and $p$ is 5. If elements in $\{x(n)\}$ satisfy the second characteristic, the 10 elements in $\{x(n)\}$ may be {0.5, 0.45, 0.4, 0.35, 0.3, 0.3, 0.35, 0.4, 0.45, 0.5}. For example, N is 20, and $p$ is 10. If elements in $\{x(n)\}$ satisfy the second characteristic, the 20 elements in $\{x(n)\}$ may be {0.75, 0.7, 0.65, 0.6, 0.55, 0.5, 0.45, 0.4, 0.35, 0.3, 0.3, 0.35, 0.4, 0.45, 0.5, 0.55, 0.6, 0.65, 0.7, 0.75}.

For example, the third characteristic may be: when $n$ less than $p1$, $x(n)$ is greater than $x(n+1)$, when $n$ is greater than $p1$ and less than $p2$, $x(n)$ is greater than or equal to $x(n-1)$, when $n$ is greater than $p2$ and less than $p3$, $x(n)$ is less than or equal to $(n-1)$, and when $n$ is greater than $p3$, $x(n)$ is greater than or equal to $x(n-1)$. For example, N is 9, $p1$ is 3, $p2$ is 5, and $p3$ is 7. If elements in $\{x(n)\}$ satisfy the third characteristic, the nine elements in $\{x(n)\}$ may be {0.4, 0.35, 0.3, 0.35, 0.4, 0.35, 0.3, 0.35, 0.4}. For example, N is 12, $p1$ is 3, $p2$ is 6, and $p3$ is 9. If elements in $\{x(n)\}$ satisfy the third characteristic, the 12 elements in $\{x(n)\}$ may be {0.4, 0.35, 0.3, 0.3, 0.35, 0.4, 0.4, 0.35, 0.3, 0.3, 0.35, 0.4}.

For example, the fourth characteristic may be: when $n$ less than $p1$, $x(n)$ is less than $x(n+1)$, when $n$ is greater than $p1$ and less than $p2$, $x(n)$ is less than or equal to $x(n-1)$, when $n$ is greater than $p2$ and less than $p3$, $x(n)$ is greater than or equal to $(n-1)$, and when $n$ is greater than $p3$, $x(n)$ is less than or equal to $x(n-1)$. For example, N is 9, $p1$ is 3, $p2$ is 5, and $p3$ is 7. If elements in $\{x(n)\}$ satisfy the fourth characteristic, the nine elements in $\{x(n)\}$ may be {0.3, 0.35, 0.4, 0.35, 0.3, 0.35, 0.4, 0.35, 0.3}. For example, N is 12, $p1$ is 3, $p2$ is 6, and $p3$ is 9. If elements in $\{x(n)\}$ satisfy the fourth characteristic, the 12 elements in $\{x(n)\}$ may be {0.3, 0.35, 0.4, 0.4, 0.35, 0.3, 0.3, 0.35, 0.4, 0.4, 0.35, 0.3}.

Here, $p$, $p1$, $p2$, and $p3$ are all integers greater than 1 and less than N. Optionally, when N is an odd number, $p$ may be $(N+1)/2$; or when N is an even number, $p$ may be N/2. This is not limited.

It should be understood that various values of the first coefficient are merely used as an example, and a specific value of the first coefficient is not limited.

In a possible implementation, the second coefficient, that is, $\{y(m)\}$ may satisfy a fifth characteristic, or may satisfy a sixth characteristic, or may satisfy a seventh characteristic, or may satisfy an eighth characteristic. This is not limited.

For example, the fifth characteristic may be: when $m$ is less than $q$, $y(m)$ is less than $y(m+1)$, and when $m$ is greater than $q$, $y(m)$ is less than or equal to $y(m-1)$. For example, M is an odd number, and the fifth characteristic may be: when $m$ is less than $q$, $y(m)$ is less than $y(m+1)$, and when $m$ is greater than $q$, $y(m)$ is less than $y(m-1)$. For example, M is 11, and $q$ is 6. If elements in $\{y(m)\}$ satisfy the fifth characteristic, the 11 elements in $\{y(m)\}$ may be {0.3, 0.35, 0.4, 0.45, 0.5, 0.6, 0.5, 0.45, 0.4, 0.35, 0.3}. For example, M is 23, and $q$ is 12. If elements in $\{y(m)\}$ satisfy the fifth characteristic, the 23 elements in $\{y(m)\}$ may be {0.3, 0.35, 0.4, 0.45, 0.5, 0.55, 0.6, 0.65, 0.7, 0.75, 0.8, 0.9, 0.8, 0.75, 0.7, 0.65, 0.6, 0.55, 0.5, 0.45, 0.4, 0.35, 0.3}.

For another example, M is an even number, and the fifth characteristic may be: when $m$ is less than $q$, $y(m)$ is less than $y(m+1)$, and when $m$ is greater than $q$, $y(m)$ is less than or equal to $y(m-1)$. For example, M is 12, and $q$ is 6. If elements in $\{y(m)\}$ satisfy the fifth characteristic, the 12 elements in $\{y(m)\}$ may be {0.3, 0.35, 0.4, 0.45, 0.5, 0.6, 0.6, 0.5, 0.45, 0.4, 0.35, 0.3}. For example, M is 24, and $q$ is 12. If elements in $\{y(m)\}$ satisfy the fifth characteristic, the 24 elements in {y(m)} may be {0.3, 0.35, 0.4, 0.45, 0.5, 0.55, 0.6, 0.65, 0.7, 0.75, 0.8, 0.9, 0.9, 0.8, 0.75, 0.7, 0.65, 0.6, 0.55, 0.5, 0.45, 0.4, 0.35, 0.3}.

For example, the sixth characteristic may be: when $m$ is less than $q$, $y(m)$ is greater than $y(m+1)$, and when $m$ is greater than $q$, $y(m)$ is greater than or equal to $y(m-1)$. For example, M is an odd number, and the sixth characteristic may be: when $m$ is less than $q$, $y(m)$ is greater than $y(m+1)$, and when $m$ is greater than $q$, $y(m)$ is greater than $y(m-1)$. For example, M is 11, and $q$ is 6. If elements in $\{y(m)\}$ satisfy the sixth characteristic, the 11 elements in $\{y(m)\}$ may be {0.6, 0.5, 0.45, 0.4, 0.35, 0.3, 0.35, 0.4, 0.45, 0.5, 0.6}. For example, M is 23, and $q$ is 12. If elements in $\{y(m)\}$ satisfy the sixth characteristic, the 23 elements in {$y(m)$} may be {0.9, 0.8, 0.75, 0.7, 0.65, 0.6, 0.55, 0.5, 0.45, 0.4, 0.35, 0.3, 0.35, 0.4, 0.45, 0.5, 0.55, 0.6, 0.65, 0.7, 0.75, 0.8, 0.9}.

For another example, M is an even number, and the sixth characteristic may be: when m is less than $q$, $y(m)$ is greater than $y(m + 1)$, and when $m$ is greater than $q$, $y(m)$ is greater than or equal to $y(m - 1)$. For example, M is 12, and $q$ is 6. If elements in {$y(m)$} satisfy the sixth characteristic, the 12 elements in {$y(m)$} may be {0.6, 0.5, 0.45, 0.4, 0.35, 0.3, 0.3, 0.35, 0.4, 0.45, 0.5, 0.6}. For example, M is 24, and q is 12. If elements in {$y(m)$} satisfy the sixth characteristic, the 24 elements in {$y(m)$} may be {0.9, 0.8, 0.75, 0.7, 0.65, 0.6, 0.55, 0.5, 0.45, 0.4, 0.35, 0.3, 0.3, 0.35, 0.4, 0.45, 0.5, 0.55, 0.6, 0.65, 0.7, 0.75, 0.8, 0.9}.

For example, the seventh characteristic may be: when m is less than $q1$, $y(m)$ is greater than $y(m + 1)$, when $m$ is greater than q1 and less than $q2$, $y(m)$ is greater than or equal to $y(m - 1)$, when $m$ is greater than $q2$ and less than $q3$, $y(m)$ is less than or equal to $(m - 1)$, and when $m$ is greater than $q3$, $y(m)$ is greater than or equal to $y(m - 1)$. For example, M is 13, $q1$ is 4, $q2$ is 7, and $q3$ is 10. If elements in {$y(m)$} satisfy the seventh characteristic, the 13 elements in {y(m)} may be {0.3, 0.35, 0.4, 0.45, 0.4, 0.35, 0.3, 0.35, 0.4, 0.45, 0.4, 0.35, 0.3}. For example, M is 16, $q1$ is 4, $q2$ is 8, and $q3$ is 12. If elements in {$y(m)$} satisfy the seventh characteristic, the 16 elements in {$y(m)$} may be {0.3, 0.35, 0.4, 0.45, 0.45, 0.4, 0.35, 0.3, 0.3, 0.35, 0.4, 0.45, 0.45, 0.4, 0.35, 0.3}.

For example, the eighth characteristic may be: when $m$ is less than $q1$, $y(m)$ is less than $y(m + 1)$, when $m$ is greater than $q1$ and less than $q2$, $y(m)$ is less than or equal to $y(m - 1)$, when $m$ is greater than $q2$ and less than $q3$, $y(m)$ is greater than or equal to $(m - 1)$, and when m is greater than $q3$, $y(m)$ is less than or equal to $y(m - 1)$. For example, M is 13, $q1$ is 4, q2 is 7, and $q3$ is 10. If elements in {y(m)} satisfy the seventh characteristic, the 13 elements in {y(m)} may be {0.3, 0.35, 0.4, 0.45, 0.4, 0.35, 0.3, 0.35, 0.4, 0.45, 0.4, 0.35, 0.3}. For example, M is 16, $q1$ is 4, q2 is 8, and $q3$ is 12. If elements in {y(m)} satisfy the seventh characteristic, the 16 elements in {y(m)} may be {0.3, 0.35, 0.4, 0.45, 0.45, 0.4, 0.35, 0.3, 0.3, 0.35, 0.4, 0.45, 0.45, 0.4, 0.35, 0.3}.

Here, $q, q1, q2,$ and $q3$ are all integers greater than 1 and less than M. Optionally, when M is an odd number, q may be $(M+1)/2$; or when M is an even number, q may be M/2. This is not limited.

It should be understood that various values of the second coefficient are merely used as an example, and a specific value of the second coefficient is not limited.

In this embodiment of this application, the first signal may be a sensing signal, but is not limited thereto. For ease of understanding, the following uses an example in which the first signal is a sensing signal for description.

In S303, the first communication apparatus sends the M first signals. In a possible implementation, the foregoing method may further include S304a and S305a; or the foregoing method may further include S304b and S305b. For example, when this embodiment of this application is applied to the scenario shown in any one of FIG. 2A, FIG. 2B, or FIG. 2C, the foregoing method may further include S304a and S305a. For another example, when this embodiment of this application is applied to the scenario shown in FIG. 2D, the foregoing method may further include S304b and S305b.

S304a: A second communication apparatus receives the M first signals.

In an implementation, the first communication apparatus sends the M first signals to the second communication apparatus. Correspondingly, the second communication apparatus receives the M first signals from the first communication apparatus. In another implementation, the first communication apparatus sends the M first signals, and the M first signals are reflected on a to-be-sensed target. Correspondingly, the second communication apparatus receives the M first signals, or the second communication apparatus receives echo signals of the M first signals.

S305a: The second communication apparatus processes the M first signals.

For example, the second communication apparatus obtains K-bit information based on the M first signals. For the K-bit information, refer to related content in S301. Details are not described herein again. In this embodiment of this application, the M first signals are signals generated based on {$e(n)(m)$}. For example, the M first signals are signals generated by performing an inverse Fourier transform on {$f(n)(m)$}, and {$f(n)(m)$} is determined based on {$x(n)$} and/or {$y(m)$}, and {$e(n)(m)$}. {$e(n)(m)$} is determined based on {$d(m)$} and {$c(n)(m)$}. {$c(n)(m)$} is determined based on {$b(n)$} and {$a(n)(m)$}. Correspondingly, the second communication apparatus may process (for example, perform inverse processing of the related processing in S301 and S302 on) the M first signals based on {$x(n)$} and/or {$y(m)$}, {$b(n)$}, and {$d(m)$}, to obtain the K-bit information. It should be understood that a specific implementation in which the second communication apparatus processes the M first signals is not limited in this embodiment of this application.

S304b: The first communication apparatus receives echo signals of the M first signals.

For example, the first communication apparatus sends the M first signals, and the M first signals are reflected on a to-be-sensed target. Correspondingly, the first communication apparatus may receive echo signals of the M first signals.

S305b: The first communication apparatus processes the echo signals of the M first signals.

In this embodiment of this application, the M first signals are signals generated based on {$e(n)(m)$}. For example, the M first signals are signals generated by performing an inverse Fourier transform on {$f(n)(m)$}, and {$f(n)(m)$} is determined based on {$x(n)$} and/or {$y(m)$}, and {$e(n)(m)$}. {$e(n)(m)$} is determined based on {$d(m)$} and {$c(n)(m)$}. {$c(n)(m)$} is determined based on {$b(n)$} and {$a(n)(m)$} . Correspondingly, the first communication apparatus may process (for example, perform inverse processing of the related processing in S301 and S302 on) the echo signals of the M first signals based on {$x(n)$} and/or {$y(m)$}, {$b$(n)}, and {$d(m)$}. It should be understood that a specific implementation in which the first communication apparatus processes the echo signals of the M first signals is not limited in this embodiment of this application.

In a possible implementation, the first communication apparatus may determine the first sequence, that is, determine {$b(n)$}. For example, the first communication apparatus may determine {$b(n)$} before S301. An element b(n) in {$b$ (n)} satisfies $b(n) = e^{-j\frac{2\pi}{N}(\alpha_1 n^2 + \beta_1 n + \gamma_1)}$ or $b(n) = e^{-j\frac{2\pi}{N}(\alpha_1 n^2 + \beta_1 n)}$. For example, the first communication apparatus may determine (or obtain) at least one of $\alpha_1$, $\beta_1$, or $\gamma_1$, and determine {$b(n)$} based on the at least one of $\alpha_1$, $\beta_1$, or $\gamma_1$. For brevity, the following uses $\alpha_1$, $\beta_1$, and $\gamma_1$, or $\alpha_1$ and $\beta_1$ as an example for description. In other words, the first communication apparatus may determine $\alpha_1$, $\beta_1$, and $\gamma_1$, and determine {$b(n)$} based on $\alpha_1$, $\beta_1$, and $\gamma_1$; or the first communication apparatus may determine $\alpha_1$ and $\beta_1$, and determine {$b(n)$} based on $\alpha_1$ and $\beta_1$. It should be understood that both "$\alpha_1$, $\beta_1$, and $\gamma_1$" and "$\alpha_1$ and $\beta_1$" in the following may be replaced with "at least one of $\alpha_1$, $\beta_1$, or $\gamma_1$".

In an example, $\alpha_1$, $\beta_1$, and $\gamma_1$ may be determined by the first communication apparatus. For example, $\alpha_1$, $\beta_1$, and $\gamma_1$ are stored locally, and the first communication apparatus may read $\alpha_1$, $\beta_1$, and $\gamma_1$ locally. For another example, the first communication apparatus may determine (or obtain) $\alpha_1$, $\beta_1$, and $\gamma_1$ based on a locally stored parameter (for example, a capability parameter). Further, the first communication apparatus may send first information. For example, the first communication apparatus may send first information to the second communication apparatus. Correspondingly, the second communication apparatus receives the first information from the first communication apparatus, and determines $\alpha_1$, $\beta_1$, and $\gamma_1$ based on the first information. The first information may indicate at least one of $\alpha_1$, $\beta_1$, or $\gamma_1$, or indicate {$b(n)$}. In other words, the first information may indicate $\alpha_1$, indicate $\beta_1$, indicate $\gamma_1$, indicate $\alpha_1$ and $\beta_1$, indicate $\alpha_1$ and $\gamma_1$, indicate $\beta_1$ and $\gamma_1$, indicate $\alpha_1$, $\beta_1$, and $\gamma_1$, or indicate {$b(n)$}. It should be understood that if the first information indicates only a part of $\alpha_1$, $\beta_1$, and $\gamma_1$, a remaining part may be a preset value, for example, 1 or 0. This is not limited. Optionally, the first information may be carried in radio resource control (radio resource control, RRC) layer signaling, or the first information may be carried in media access control (media access control, MAC) layer signaling. This is not limited.

In another example, $\alpha_1$, $\beta_1$, and $\gamma_1$ may alternatively be determined by the second communication apparatus. Further, the second communication apparatus may send first information to the first communication apparatus. Correspondingly, the first communication apparatus may receive the first information, and determine $\alpha_1$, $\beta_1$, and $\gamma_1$ based on the first information. For example, the second communication apparatus may locally read $\alpha_1$, $\beta_1$, and $\gamma_1$. For another example, the second communication apparatus may determine (or obtain) $\alpha_1$, $\beta_1$, and $\gamma_1$ based on a locally stored parameter (for example, a capability parameter). For the first information, refer to the foregoing content. Details are not described again.

It should be understood that $\alpha_1$ and $\beta_1$ may be determined by the first communication apparatus. For a specific implementation process, refer to the foregoing descriptions of determining $\alpha_1$, $\beta_1$, and $\gamma_1$ by the first communication apparatus. Details are not described again. Alternatively, $\alpha_1$ and $\beta_1$ may be determined by the second communication apparatus. For a specific implementation process, refer to the descriptions of determining $\alpha_1$, $\beta_1$, and $\gamma_1$ by the second communication apparatus. Details are not described again. Correspondingly, the first information may indicate $\alpha_1$ and/or $\beta_1$, or indicate {$b(n)$}. For details, refer to the foregoing content. Details are not described again.

As mentioned above, the first information may indicate at least one of $\alpha_1$, $\beta_1$, or $\gamma_1$. In an implementation, the first information may include a first field, and the first field may indicate at least one of $\alpha_1$, $\beta_1$, or $\gamma_1$. For example, a plurality of sets of values of at least one of $\alpha_1$, $\beta_1$, or $\gamma_1$ are predefined, and one value of the first field may indicate one of the plurality of sets of values. For example, a plurality of sets of values of $\alpha_1$, $\beta_1$, and $\gamma_1$ are predefined, and one value of the first field may indicate one of the plurality of sets of values. For another example, a plurality of sets of values of $\alpha_1$ and $\beta_1$ are predefined, and one value of the first field may indicate one of the plurality of sets of values.

For example, the first field indicates $\alpha_1$, $\beta_1$, and $\gamma_1$. It is assumed that $\alpha_1$, $\beta_1$, and $\gamma_1$ are predefined to include four sets of values. The first field occupies 2 bits. If the value of the first field is 00, the first field may indicate that $\alpha_1$, $\beta_1$, and $\gamma_1$ use the first set of values; if the value of the first field is 01, the first field may indicate that $\alpha_1$, $\beta_1$, and $\gamma_1$ use the second set of values; if the value of the first field is 10, the first field may indicate that $\alpha_1$, $\beta_1$, and $\gamma_1$ use the third set of values; and if the value of the first field is 11, the first field may indicate that $\alpha_1$, $\beta_1$, and $\gamma_1$ use the fourth set of values, as shown in Table 1. It should be understood that each data in Table 1 is merely used as an example, and does not limit a specific form of the first field.

Table 1

| Value of the first field | Meaning |
| --- | --- |
| 00 | $\alpha_1$, $\beta_1$, and $\gamma_1$ use the first set of values |
| 01 | $\alpha_1$, $\beta_1$, and $\gamma_1$ use the second set of values |
| 10 | $\alpha_1$, $\beta_1$, and $\gamma_1$ use the third set of values |

(continued)

| Value of the first field | Meaning |
| --- | --- |
| 11 | $\alpha_1$, $\beta_1$, and $\gamma_1$ use the fourth set of values |

For example, the first field indicates $\alpha_1$ and. It is assumed that $\alpha_1$ and $\beta_1$ are predefined to include four sets of values. The first field occupies 2 bits. If the value of the first field is 00, the first field may indicate that $\alpha_1$ and $\beta_1$ use the first set of values; if the value of the first field is 01, the first field may indicate that $\alpha_1$ and $\beta_1$ use the second set of values; if the value of the first field is 10, the first field may indicate that $\alpha_1$ and $\beta_1$ use the third set of values; and if the value of the first field is 11, the first field may indicate that $\alpha_1$ and $\beta_1$ use the fourth set of values, as shown in Table 2. It should be understood that each data in Table 2 is merely used as an example, and does not limit a specific form of the first field.

Table 2

| Value of the first field | Meaning |
| --- | --- |
| 00 | $\alpha_1$ and $\beta_1$ use the first set of values |
| 01 | $\alpha_1$ and $\beta_1$ use the second set of values |
| 10 | $\alpha_1$ and $\beta_1$ use the third set of values |
| 11 | $\alpha_1$ and $\beta_1$ use the fourth set of values |

In a possible implementation, the first communication apparatus may determine the second sequence, that is, determine $\{d(m)\}$. For example, the first communication apparatus may determine $\{d(m)\}$ before S302. An element d(m) in $\{d(m)\}$ satisfies $d(m) = e^{-j\frac{2\pi}{M}(\alpha_2 m^2 + \beta_2 m + \gamma_2)}$ or $d(m) = e^{-j\frac{2\pi}{M}(\alpha_2 m^2 + \beta_2 m)}$. For example, the first communication apparatus may determine (or obtain) at least one of $\alpha_2$, $\beta_2$, or $\gamma_2$, and determine $\{d(m)\}$ based on the at least one of $\alpha_2$, $\beta_2$, or $\gamma_2$. For brevity, the following uses $\alpha_2$, $\beta_2$, and $\gamma_2$, or $\alpha_2$ and $\beta_2$ as an example for description. In other words, the first communication apparatus may determine $\alpha_2$, $\beta_2$, and $\gamma_2$, and determine $\{d(m)\}$ based on $\alpha_2$, $\beta_2$, and $\gamma_2$; or the first communication apparatus may determine $\alpha_2$ and $\beta_2$, and determine $\{d(m)\}$ based on $\alpha_2$ and $\beta_2$. It should be understood that both "$\alpha_2$, $\beta_2$, and $\gamma_2$" and "$\alpha_2$ and $\beta_2$" in the following may be replaced with "at least one of $\alpha_2$, $\beta_2$, or $\gamma_2$".
In an example, $\alpha_2$, $\beta_2$, and $\gamma_2$ may be determined by the first communication apparatus. For example, $\alpha_2$, $\beta_2$, and $\gamma_2$ are stored locally, and the first communication apparatus may read $\alpha_2$, $\beta_2$, and $\gamma_2$ locally. For another example, the first communication apparatus may determine (or obtain) $\alpha_2$, $\beta_2$, and $\gamma_2$ based on a locally stored parameter (for example, a capability parameter). Further, the first communication apparatus may send second information. For example, the first communication apparatus may send second information to the second communication apparatus. Correspondingly, the second communication apparatus receives the second information from the first communication apparatus, and determines $\alpha_2$, $\beta_2$, and $\gamma_2$ based on the second information. The second information may indicate at least one of $\alpha_2$, $\beta_2$, or $\gamma_2$, or indicate $\{d(m)\}$. In other words, the second information may indicate $\alpha_2$, indicate $\beta_2$, indicate $\gamma_2$, indicate $\alpha_2$ and $\beta_2$, indicate $\alpha_2$ and $\gamma_2$, indicate $\beta_2$ and $\gamma_2$, indicate $\alpha_2$, $\beta_2$, and $\gamma_2$, or indicate $\{d(m)\}$. It should be understood that if the second information indicates only a part of $\alpha_2$, $\beta_2$, and $\gamma_2$, a remaining part may be a preset value, for example, 1 or 0. This is not limited. Optionally, the second information may be carried in RRC layer signaling, or the second information may be carried in MAC layer signaling. This is not limited.
In another example, $\alpha_2$, $\beta_2$, and $\gamma_2$ may alternatively be determined by the second communication apparatus. Further, the second communication apparatus may send second information to the first communication apparatus. Correspondingly, the first communication apparatus may receive the second information, and determine $\alpha_2$, $\beta_2$, and $\gamma_2$ based on the second information. For example, the second communication apparatus may locally read $\alpha_2$, $\beta_2$, and $\gamma_2$. For another example, the second communication apparatus may determine (or obtain) $\alpha_2$, $\beta_2$, and $\gamma_2$ based on a locally stored parameter (for example, a capability parameter). For the second information, refer to the foregoing content. Details are not described again.
It should be understood that $\alpha_2$ and $\beta_2$ may be determined by the first communication apparatus. For a specific implementation process, refer to the foregoing descriptions of determining $\alpha_2$, $\beta_2$, and $\gamma_2$ by the first communication apparatus. Details are not described again. Alternatively, $\alpha_2$ and $\beta_2$ may be determined by the second communication apparatus. For a specific implementation process, refer to the descriptions of determining $\alpha_2$, $\beta_2$, and $\gamma_2$ by the second communication apparatus. Details are not described again. Correspondingly, the second information may indicate $\alpha_2$ and/or $\beta_2$, or indicate $\{d(m)\}$. For details, refer to the foregoing content. Details are not described again.
As mentioned above, the second information may indicate at least one of $\alpha_2$, $\beta_2$, or $\gamma_2$. In an implementation, the second information may include a second field, and the second field may indicate at least one of $\alpha_2$, $\beta_2$, or $\gamma_2$. For example,

a plurality of sets of values of at least one of $\alpha_2$, $\beta_2$, or $\gamma_2$ are predefined, and one value of the second field may indicate one of the plurality of sets of values. For example, a plurality of sets of values of $\alpha_2$, $\beta_2$, and $\gamma_2$ are predefined, and one value of the first field may indicate one of the plurality of sets of values. For another example, a plurality of sets of values of $\alpha_2$ and $\beta_2$ are predefined, and one value of the first field may indicate one of the plurality of sets of values.

For example, the second field indicates $\alpha_2$, $\beta_2$, and $\gamma_2$. It is assumed that $\alpha_2$, $\beta_2$, and $\gamma_2$ are predefined to include four sets of values. The second field occupies 2 bits. If the value of the second field is 00, the second field may indicate that $\alpha_2$, $\beta_2$, and $\gamma_2$ use the first set of values; if the value of the second field is 01, the second field may indicate that $\alpha_2$, $\beta_2$, and $\gamma_2$ use the second set of values; if the value of the second field is 10, the second field may indicate that $\alpha_2$, $\beta_2$, and $\gamma_2$ use the third set of values; and if the value of the second field is 11, the second field may indicate that $\alpha_2$, $\beta_2$, and $\gamma_2$ use the fourth set of values, as shown in Table 3. It should be understood that each data in Table 3 is merely used as an example, and does not limit a specific form of the second field.

Table 3

| Value of the second field | Meaning |
| --- | --- |
| 00 | $\alpha_2$, $\beta_2$, and $\gamma_2$ use the first set of values |
| 01 | $\alpha_2$, $\beta_2$, and $\gamma_2$ use the second set of values |
| 10 | $\alpha_2$, $\beta_2$, and $\gamma_2$ use the third set of values |
| 11 | $\alpha_2$, $\beta_2$, and $\gamma_2$ use the fourth set of values |

For example, the second field indicates $\alpha_2$ and $\beta_2$. It is assumed that $\alpha_2$ and $\beta_2$ are predefined to include four sets of values. The second field occupies 2 bits. If the value of the second field is 00, the second field may indicate that $\alpha_2$ and $\beta_2$ use the first set of values; if the value of the second field is 01, the second field may indicate that $\alpha_2$ and $\beta_2$ use the second set of values; if the value of the second field is 10, the second field may indicate that $\alpha_2$ and $\beta_2$ use the third set of values; and if the value of the second field is 11, the second field may indicate that $\alpha_2$ and $\beta_2$ use the fourth set of values, as shown in Table 4. It should be understood that each data in Table 4 is merely used as an example, and does not limit a specific form of the second field.

Table 4

| Value of the second field | Meaning |
| --- | --- |
| 00 | $\alpha_2$ and $\beta_2$ use the first set of values |
| 01 | $\alpha_2$ and $\beta_2$ use the second set of values |
| 10 | $\alpha_2$ and $\beta_2$ use the third set of values |
| 11 | $\alpha_2$ and $\beta_2$ use the fourth set of values |

In a possible implementation, the first communication apparatus may determine the first coefficient, that is, determine $\{x(n)\}$. For example, the first communication apparatus may determine $\{x(n)\}$ before S303. In an example, $\{x(n)\}$ may be determined by the first communication apparatus. For example, $\{x(n)\}$ is stored locally, and the first communication apparatus may read $\{x(n)\}$ locally. For another example, the first communication apparatus may determine (or obtain) $\{x(n)\}$ based on a locally stored parameter (for example, a capability parameter). Further, the first communication apparatus may send third information. The third information may indicate $\{x(n)\}$. For example, the first communication apparatus may send third information to the second communication apparatus. Correspondingly, the second communication apparatus receives the third information from the first communication apparatus, and determines $\{x(n)\}$ based on the third information.

In another example, $\{x(n)\}$ may alternatively be determined by the second communication apparatus. Further, the second communication apparatus may send third information to the first communication apparatus. Correspondingly, the first communication apparatus may receive the third information, and determine $\{x(n)\}$ based on the third information. For example, the second communication apparatus may locally read $\{x(n)\}$. For another example, the second communication apparatus may determine (or obtain) $\{x(n)\}$ based on a locally stored parameter (for example, a capability parameter). For the third information, refer to the foregoing content. Details are not described again.

The third information may be carried in RRC layer signaling, or the third information may be in MAC layer signaling. This is not limited.

Optionally, the third information may include a third field, and the third field may indicate $\{x(n)\}$. For example, a plurality of sets of values of $\{x(n)\}$ are predefined, and one value of the third field may indicate one of the plurality of sets of values of $\{x(n)\}$. For example, it is assumed that $\{x(n)\}$ is predefined to include four sets of values. The third field occupies 2 bits. If the value of the third field is 00, the third field may indicate that $\{x(n)\}$ uses the first set of values; if the value of the third field is 01, the third field may indicate that $\{x(n)\}$ uses the second set of values; if the value of the third field is 10, the third field may indicate that $\{x(n)\}$ uses the third set of values; and if the value of the third field is 11, the third field may indicate that $\{x(n)\}$ uses the fourth set of values, as shown in Table 5. It should be understood that each data in Table 5 is merely used as an example, and does not limit a specific form of the third field.

Table 5

| Value of the third field | Meaning |
|---|---|
| 00 | $\{x(n)\}$ uses the first set of values |
| 01 | $\{x(n)\}$ uses the second set of values |
| 10 | $\{x(n)\}$ uses the third set of values |
| 11 | $\{x(n)\}$ uses the fourth set of values |

In a possible implementation, the first communication apparatus may determine the second coefficient, that is, determine $\{y(m)\}$. For example, the first communication apparatus may determine $\{y(m)\}$ before S303. In an example, $\{y(m)\}$ may be determined by the first communication apparatus. For example, $\{y(m)\}$ is stored locally, and the first communication apparatus may read $\{y(m)\}$ locally. For another example, the first communication apparatus may determine (or obtain) $\{y(m)\}$ based on a locally stored parameter (for example, a capability parameter). Further, the first communication apparatus may send fourth information. The fourth information may indicate $\{y(m)\}$. For example, the first communication apparatus may send fourth information to the second communication apparatus. Correspondingly, the second communication apparatus receives the fourth information from the first communication apparatus, and determines $\{y(m)\}$ based on the fourth information.

In another example, $\{y(m)\}$ may alternatively be determined by the second communication apparatus. Further, the second communication apparatus may send fourth information to the first communication apparatus. Correspondingly, the first communication apparatus may receive the fourth information, and determine $\{y(m)\}$ based on the fourth information. For example, the second communication apparatus may locally read $\{y(m)\}$. For another example, the second communication apparatus may determine (or obtain) $\{y(m)\}$ based on a locally stored parameter (for example, a capability parameter). For the fourth information, refer to the foregoing content. Details are not described again.

The fourth information may be carried in RRC layer signaling, or the fourth information may be carried in MAC layer signaling. This is not limited.

Optionally, the fourth information may include a fourth field, and the fourth field may indicate $\{y(m)\}$. For example, a plurality of sets of values of $\{y(m)\}$ are predefined, and one value of the fourth field may indicate one of the plurality of sets of values of $\{y(m)\}$. For example, it is assumed that $\{y(m)\}$ is predefined to include four sets of values. The fourth field occupies 2 bits. If the value of the fourth field is 00, the fourth field may indicate that $\{y(m)\}$ uses the first set of values; if the value of the fourth field is 01, the fourth field may indicate that $\{y(m)\}$ uses the second set of values; if the value of the fourth field is 10, the fourth field may indicate that $\{y(m)\}$ uses the third set of values; and if the value of the fourth field is 11, the fourth field may indicate that $\{y(m)\}$ uses the fourth set of values, as shown in Table 6. It should be understood that each data in Table 6 is merely used as an example, and does not limit a specific form of the fourth field.

Table 6

| Value of the fourth field | Meaning |
|---|---|
| 00 | $\{y(m)\}$ uses the first set of values |
| 01 | $\{y(m)\}$ uses the second set of values |
| 10 | $\{y(m)\}$ uses the third set of values |
| 11 | $\{y(m)\}$ uses the fourth set of values |

In a possible implementation, the second communication apparatus may determine the first sequence, that is, determine $\{b(n)\}$. For example, the second communication apparatus may determine $\{b(n)\}$ before S305a. For a specific implementation process of determining $\{b(n)\}$ by the second communication apparatus, refer to content of determining $\{b(n)\}$ by the first communication apparatus. Details are not described again.

In a possible implementation, the second communication apparatus may determine the second sequence, that is, determine $\{d(m)\}$. For example, the second communication apparatus may determine $\{d(m)\}$ before S305a. For a specific implementation process of determining {*d*(*m*)} by the second communication apparatus, refer to content of determining {*d*(m)} by the first communication apparatus. Details are not described again.

In a possible implementation, the second communication apparatus may determine the first coefficient, that is, determine {*x*(*n*)}. For example, the second communication apparatus may determine {*x*(*n*)} before S305a. For a specific implementation process of determining {*x*(*n*)} by the second communication apparatus, refer to content of determining {*x*(*n*)} by the first communication apparatus. Details are not described again.

In a possible implementation, the second communication apparatus may determine the second coefficient, that is, determine {*y*(*m*)}. For example, the second communication apparatus may determine {*y*(*m*)} before S305a. For a specific implementation process of determining {*y*(*m*)} by the second communication apparatus, refer to content of determining {*y*(*m*)} by the first communication apparatus. Details are not described again.

It should be understood that the first information and the second information may be carried in different messages, or may be carried in a same message. When the first information and the second information are carried in a same message, one piece of information may indicate at least one of $\alpha_1$, $\beta_1$, or $\gamma_1$, and indicate at least one of $\alpha_2$, $\beta_2$, or $\gamma_2$. For example, the first information may indicate at least one of $\alpha_1$, $\beta_1$, or $\gamma_1$, and/or the first information may indicate at least one of $\alpha_2$, $\beta_2$, or $\gamma_2$; or the first information may indicate {*b*(*n*)} and/or {*d*(*m*)}.

The third information and the fourth information may be carried in different messages, or may be carried in a same message. When the third information and the fourth information are carried in a same message, one piece of information may indicate {*x*(*n*)} and {*y*(*m*)}. For example, the third information may indicate {*x*(*n*)} and/or {*y*(*m*)}.

Further, the first information, the second information, the third information, and the fourth information may be carried in different messages, or may be carried in a same message. When the first information, the second information, the third information, and the fourth information are carried in a same message, one piece of information may indicate at least one of $\alpha_1$, $\beta_1$, or $\gamma_1$, at least one of $\alpha_2$, $\beta_2$, or $\gamma_2$, {*x*(*n*)}, and {*y*(*m*)}. For example, the first information may indicate at least one of at least one of $\alpha_1$, ,$\beta_1$, or $\gamma_1$, at least one of $\alpha_2$, $\beta_2$, or $\gamma_2$, {*x*(*n*)}, or {*y*(*m*)}; or the first information may indicate at least one of {*b*(*n*)}, {*d*(*m*)}, {*x*(*n*)}, or {*y*(*m*)}.

For brevity, the following uses an example in which the first information indicates (or determine) {*b*(*n*)}, {*d*(*m*)}, {*x*(*n*)}, and {*y*(*m*)} for description. For example, the first information includes a first field, a second field, a third field, and a fourth field, where the first field indicates {*b*(*n*)}, the second field indicates {*d*(*m*)}, the third field indicates {*x*(*n*)}, and the fourth field indicates {*y*(*m*)}. For the first field, the second field, the third field, and the fourth field, refer to the foregoing content. Details are not described again. "indicate {*b*(*n*)}" may be replaced with "indicate at least one of $\alpha_1$, $\beta_1$, or $\gamma_1$". "{*d*(*m*)}" may be replaced with "at least one of $\alpha_2$, $\beta_2$, or $\gamma_2$".

In S304a, the second communication apparatus may receive the M first signals. For example, the first communication apparatus may be a first network device or a component in the first network device, and then the second communication apparatus may be a second terminal device or a component in the second terminal device, as shown in FIG. 2A; or the second communication apparatus may be a second network device or a component in the second network device, as shown in FIG. 2B. For another example, the first communication apparatus may be a first terminal device or a component in the first terminal device, and then the second communication apparatus may be a second network device or a component in the second network device, as shown in FIG. 2C. In S304b, the first communication apparatus may receive the echo signals of the M first signals. For example, the first communication apparatus may be a first network device or a component in the first network device, as shown in FIG. 2D.

The following describes the embodiment shown in FIG. 3 with reference to the four sensing scenarios shown in FIG. 2A to FIG. 2D. The first sequence is denoted as {*b*(*n*)}, the second sequence is denoted as {*d*(*m*)}, the first coefficient is denoted as {*x*(*n*)}, the second coefficient is denoted as {*y*(*m*)}, the first symbol is denoted as {*c*(*n*)(*m*)}, the second symbol is denoted as {*e*(*n*)(*m*)}, the third symbol is denoted as {*f*(*n*)(*m*)}, the fourth symbol is denoted as {*a*(*n*)(*m*)}, and the fifth symbol is denoted as {*h*(*n*)(*m*)}.

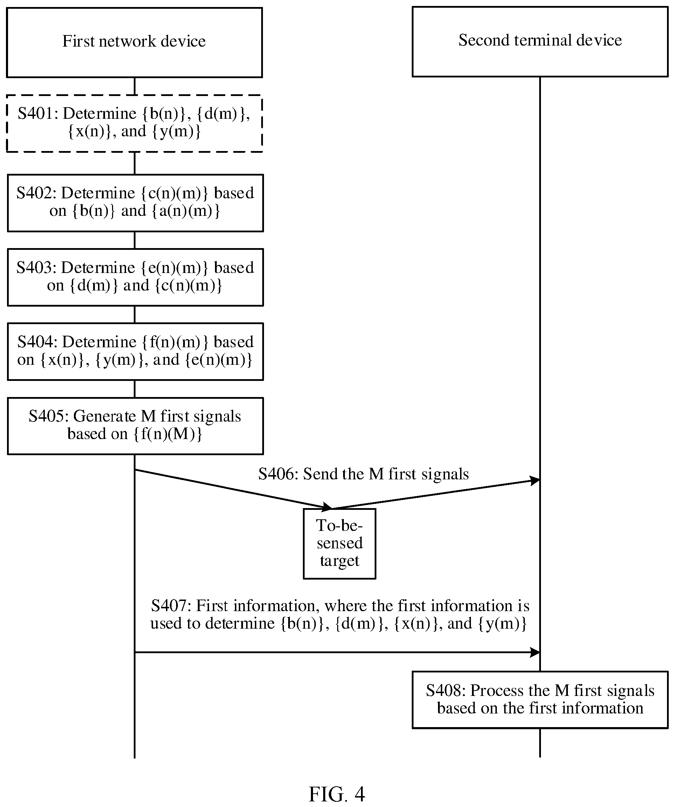

FIG. 4 shows an example of a schematic flowchart of a communication method according to an embodiment of this application. This embodiment may be applied to the sensing scenario shown in FIG. 2A. The first communication apparatus may be a first network device, and the second communication apparatus may be a second terminal device. As shown in FIG. 4, the method may include the following content.

S401: The first network device determines {*b*(*n*)}, {*d*(*m*)}, {*x*(*n*)}, and {*y*(*m*)}.

S401 is an optional step, and is represented by a dashed line in FIG. 4. For a process of determining {*b*(*n*)}, {*d*(*m*)}, {*x*(*n*)}, and {*y*(*m*)}, refer to content in the embodiment shown in FIG. 3. Details are not described again.

S402: The first network device determines {*c*(*n*)(*m*)} based on {*b*(*n*)} and {*a*(*n*)(*m*)}.

For example, the first network device may process {*a*(*n*)(*m*)} based on {*b*(*n*)} to obtain {*c*(*n*)(*m*)}. An element c(n)(m) in {*c*(*n*)(*m*)} satisfies $c(n)(m) = a(n)(m) \times b(n)$. Optionally, {*a*(*n*)(*m*)} may be obtained by performing an N-point Fourier transform on {*h*(*n*)(*m*)}; or {*a*(*n*)(*m*)} may be obtained by performing an M-point Fourier transform on {*h*(*n*)(*m*)}; or {*a*(*n*)(*m*)} may be obtained by performing both an N-point Fourier transform and an M-point Fourier transform on {*h*(*n*)(*m*)}. For a specific implementation process of S402, refer to content of S301. Details are not described again.

S403: The first network device determines {*e*(*n*)(*m*)} based on {*d*(*m*)} and {*c*(*n*)(*m*)}.

For example, the first network device may process $\{c(n)(m)\}$ based on $\{d(m)\}$ to obtain $\{e(n)(m)\}$. An element e(n)(m) in $\{e(n)(m)\}$ satisfies $e(n)(m) = c(n)(m) \times d(m)$. For a specific implementation process of S403, refer to content of S302. Details are not described again.

S404: The first network device determines $\{f(n)(m)\}$ based on $\{x(n)\}$, $\{y(m)\}$, and $\{e(n)(m)\}$.

For example, the first network device may process $\{e(n)(m)\}$ based on $\{x(n)\}$ and/or $\{y(m)\}$ to obtain $\{f(n)(m)\}$. In FIG. 4, an example in which $\{e(n)(m)\}$ is processed based on $\{x(n)\}$ and $\{y(m)\}$ is used. An element f(n)(m) in $\{f(n)(m)\}$ satisfies $f(n)(m) = e(n)(m) \times x(n) \times y(m)$. For a specific implementation process of S404, refer to related content of S303. Details are not described again.

S405: The first network device generates M first signals based on $\{f(n)(m)\}$.

The M first signals are located in M time units. An $i^{th}$ first signal among the M first signals is located in an $i^{th}$ time unit among the M time units. For a specific implementation process of S405, refer to related content of S303. Details are not described again.

S406: The first network device sends the M first signals.

Correspondingly, the second terminal device receives the M first signals.

The first network device sends the M first signals, and the M first signals are reflected on a to-be-sensed target. Correspondingly, the second terminal device receives the M first signals. For a specific implementation process of S406, refer to related content of S303 and S304a. Details are not described again.

S407: The first network device sends first information.

Correspondingly, the second terminal device receives the first information from the first network device.

In this embodiment, the first network device may send the first information to the second terminal device. Correspondingly, the second terminal device receives the first information from the first network device. The first information may be used to determine $\{b(n)\}$, $\{d(m)\}$, $\{x(n)\}$, and $\{y(m)\}$. The first information may be carried in RRC layer signaling, or may be carried in MAC layer signaling. This is not limited. For specific descriptions of the first information, refer to related content in the embodiment shown in FIG. 3. Details are not described again.

It should be understood that an execution sequence of S407 is used as an example, and this embodiment of this application is not limited thereto. For example, the first network device may send the first information after sending the M first signals, or may send the first information before sending the M first signals, or may send the first information while sending the M first signals.

S408: The second terminal device processes the M first signals based on the first information.

For example, the second terminal device determines $\{b(n)\}$, $\{d(m)\}$, $\{x(n)\}$, and $\{y(m)\}$ based on the first information, and processes the M first signals based on $\{b(n)\}$,

$\{d(m)\}$, $\{x(n)\}$, and $\{y(m)\}$. For a specific implementation process of S408, refer to content of S305a. Details are not described again.

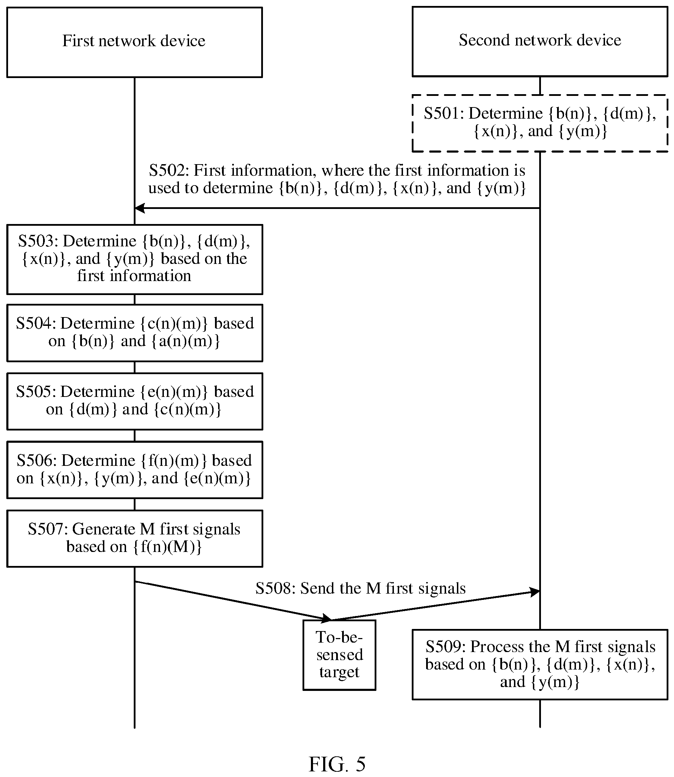

FIG. 4 describes a procedure in which embodiments of this application are applied to the sensing scenario shown in FIG. 2A. When an embodiment of this application is applied to the sensing scenario shown in FIG. 2B (that is, the first communication apparatus may be the first network device, and the second communication apparatus may be the second network device), $\{b(n)\}$, $\{d(m)\}$, $\{x(n)\}$, and $\{y(m)\}$ may be determined by the first network device. In this case, the second terminal device in the embodiment shown in FIG. 4 may be replaced with the second network device, to obtain a procedure in which an embodiment of this application is applied to the sensing scenario shown in FIG. 2B. Alternatively, $\{b(n)\}$, $\{d(m)\}$, $\{x(n)\}$, and $\{y(m)\}$ may be determined by the second network device, as shown in FIG. 5.

FIG. 5 shows an example of a schematic flowchart of a communication method according to an embodiment of this application. This embodiment may be applied to the sensing scenario shown in FIG. 2B. The first communication apparatus may be a first network device, and the second communication apparatus may be a second network device. As shown in FIG. 5, the method may include the following content.

S501: The second network device determines $\{b(n)\}$, $\{d(m)\}$, $\{x(n)\}$, and $\{y(m)\}$.

S501 is an optional step, and is represented by a dashed line in FIG. 5. For a process of determining $\{b(n)\}$, $\{d(m)\}$, $\{x(n)\}$, and $\{y(m)\}$, refer to content in the embodiment shown in FIG. 3. Details are not described again.

S502: The second network device sends first information.

Correspondingly, the first network device receives the first information.

In this embodiment, the second network device may send the first information to the first network device. Correspondingly, the first network device receives the first information from the second network device. The first information may be used to determine $\{b(n)\}$, $\{d(m)\}$, $\{x(n)\}$, and $\{y(m)\}$. The first information may be carried in RRC layer signaling, or may be carried in MAC layer signaling. This is not limited. For specific descriptions of the first information, refer to related content in the embodiment shown in FIG. 3. Details are not described again.

S503: The first network device determines $\{b(n)\}$, $\{d(m)\}$, $\{x(n)\}$, and $\{y(m)\}$ based on the first information.

S504: The first network device determines $\{c(n)(m)\}$ based on $\{b(n)\}$ and $\{a(n)(m)\}$.

For example, the first network device may process $\{a(n)(m)\}$ based on $\{b(n)\}$ to obtain $\{c(n)(m)\}$. An element c(n)(m) in $\{c(n)(m)\}$ satisfies $c(n)(m) = a(n)(m) \times b(n)$. Optionally, $\{a(n)(m)\}$ may be obtained by performing an N-point Fourier transform on $\{h(n)(m)\}$; or $\{a(n)(m)\}$ may be obtained by performing an M-point Fourier transform on $\{h(n)(m)\}$; or $\{a(n)(m)\}$ may be obtained by performing both an N-point Fourier transform and an M-point Fourier transform on $\{h(n)(m)\}$. For a specific implementation process of S504, refer to content of S301. Details are not described again.

S505: The first network device determines $\{e(n)(m)\}$ based on $\{d(m)\}$ and $\{c(n)(m)\}$.

For example, the first network device may process $\{c(n)(m)\}$ based on $\{d(m)\}$ to obtain $\{e(n)(m)\}$. An element e(n)(m) in $\{e(n)(m)\}$ satisfies $e(n)(m) = c(n)(m) \times d(m)$. For a specific implementation process of S505, refer to content of S302. Details are not described again.

S506: The first network device determines $\{f(n)(m)\}$ based on $\{x(n)\}$, $\{y(m)\}$, and $\{e(n)(m)\}$.

For example, the first network device may process $\{e(n)(m)\}$ based on $\{x(n)\}$ and/or $\{y(m)\}$ to obtain $\{f(n)(m)\}$. In FIG. 5, an example in which $\{e(n)(m)\}$ is processed based on $\{x(n)\}$ and $\{y(m)\}$ is used. An element f(n)(m) in $\{f(n)(m)\}$ satisfies $f(n)(m) = e(n)(m) \times x(n) \times y(m)$. For a specific implementation process of S506, refer to related content of S303. Details are not described again.

S507: The first network device generates M first signals based on $\{f(n)(m)\}$.

The M first signals are located in M time units. An $i^{th}$ first signal among the M first signals is located in an $i^{th}$ time unit among the M time units. For a specific implementation process of S507, refer to related content of S303. Details are not described again.

S508: The first network device sends the M first signals.

Correspondingly, the second network device receives the M first signals.

The first network device sends the M first signals, and the M first signals are reflected on a to-be-sensed target. Correspondingly, the second network device receives the M first signals. For a specific implementation process of S508, refer to related content of S303 and S304a. Details are not described again.

S509: The second network device processes the M first signals based on $\{b(n)\}$, $\{d(m)\}$, $\{x(n)\}$, and $\{y(m)\}$.

For example, the second network device may process the M first signals based on $\{b(n)\}$, $\{d(m)\}$, $\{x(n)\}$, and $\{y(m)\}$. For a specific implementation process of S509, refer to content of S305a. Details are not described again.

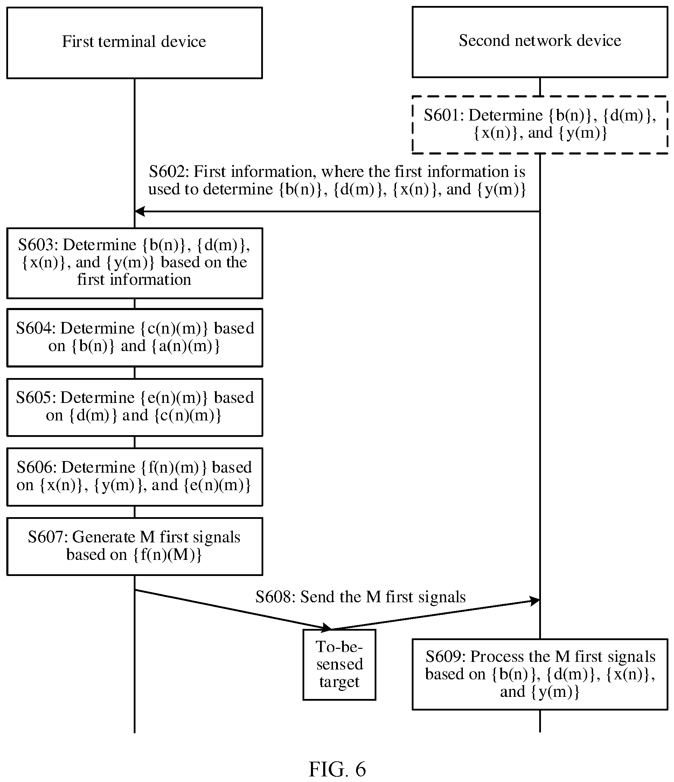

FIG. 5 describes a procedure in which embodiments of this application are applied to the sensing scenario shown in FIG. 2B. The following describes a procedure in which an embodiment of this application is applied to the sensing scenario shown in FIG. 2C, as shown in FIG. 6.

FIG. 6 shows an example of a schematic flowchart of a communication method according to an embodiment of this application. This embodiment may be applied to the sensing scenario shown in FIG. 2C. The first communication apparatus may be a first terminal device, and the second communication apparatus may be a second network device. As shown in FIG. 6, the method may include the following content.

S601: The second network device determines $\{b(n)\}$, $\{d(m)\}$, $\{x(n)\}$, and $\{y(m)\}$.

S601 is an optional step, and is represented by a dashed line in FIG. 6. For a process of determining $\{b(n)\}$, $\{d(m)\}$, $\{x(n)\}$, and $\{y(m)\}$, refer to content in the embodiment shown in FIG. 3. Details are not described again.

S602: The second network device sends first information.

Correspondingly, the first terminal device receives the first information.

In this embodiment, the second network device may send the first information to the first terminal device. Correspondingly, the first terminal device receives the first information from the second network device. The first information may be used to determine $\{b(n)\}$, $\{d(m)\}$, $\{x(n)\}$, and $\{y(m)\}$. The first information may be carried in RRC layer signaling, or may be carried in MAC layer signaling. This is not limited. For specific descriptions of the first information, refer to related content in the embodiment shown in FIG. 3. Details are not described again.

S603: The first terminal device determines $\{b(n)\}$, $\{d(m)\}$, $\{x(n)\}$, and $\{y(m)\}$ based on the first information.

S604: The first terminal device determines $\{c(n)(m)\}$ based on $\{b(n)\}$ and $\{a(n)(m)\}$.

For example, the first terminal device may process $\{a(n)(m)\}$ based on $\{b(n)\}$ to obtain $\{c(n)(m)\}$. An element c(n)(m) in $\{c(n)(m)\}$ satisfies $c(n)(m) = a(n)(m) \times b(n)$.

Optionally, $\{a(n)(m)\}$ may be obtained by performing an N-point Fourier transform on $\{h(n)(m)\}$; or $\{a(n)(m)\}$ may be obtained by performing an M-point Fourier transform on $\{h(n)(m)\}$; or $\{a(n)(m)\}$ may be obtained by performing both an N-point Fourier transform and an M-point Fourier transform on $\{h(n)(m)\}$. For a specific implementation process of S604, refer to content of S301. Details are not described again.

S605: The first terminal device determines $\{e(n)(m)\}$ based on $\{d(m)\}$ and $\{c(n)(m)\}$.

For example, the first terminal device may process $\{c(n)(m)\}$ based on $\{d(m)\}$ to obtain $\{e(n)(m)\}$. An element e(n)(m) in $\{e(n)(m)\}$ satisfies $e(n)(m) = c(n)(m) \times d(m)$. For a specific implementation process of S605, refer to content of S302. Details are not described again.

S606: The first terminal device determines $\{f(n)(m)\}$ based on $\{x(n)\}$, $\{y(m)\}$, and $\{e(n)(m)\}$.

For example, the first terminal device may process $\{e(n)(m)\}$ based on $\{x(n)\}$ and/or $\{y(m)\}$ to obtain $\{f(n)(m)\}$. In FIG. 6, an example in which $\{e(n)(m)\}$ is processed based on $\{x(n)\}$ and $\{y(m)\}$ is used. An element f(n)(m) in $\{f(n)(m)\}$ satisfies $f(n)(m) = e(n)(m) \times x(n) \times y(m)$. For a specific implementation process of S606, refer to related content of S303. Details are not described again.

S607: The first terminal device generates M first signals based on $\{f(n)\,(m)\}$.

The M first signals are located in M time units. An $i^{th}$ first signal among the M first signals is located in an $i^{th}$ time unit among the M time units. For a specific implementation process of S607, refer to related content of S303. Details are not described again.

S608: The first terminal device sends the M first signals.

Correspondingly, the second network device receives the M first signals.

The first terminal device sends the M first signals, and the M first signals are reflected on a to-be-sensed target. Correspondingly, the second network device receives the M first signals. For a specific implementation process of S608, refer to related content of S303 and S304a. Details are not described again.

S609: The second network device processes the M first signals based on $\{b(n)\}$, $\{d(m)\}$, $\{x(n)\}$, and $\{y(m)\}$.

For example, the second network device may process the M first signals based on $\{b(n)\}$, $\{d(m)\}$, $\{x(n)\}$, and $\{y(m)\}$. For a specific implementation process of S609, refer to content of S305a. Details are not described again.

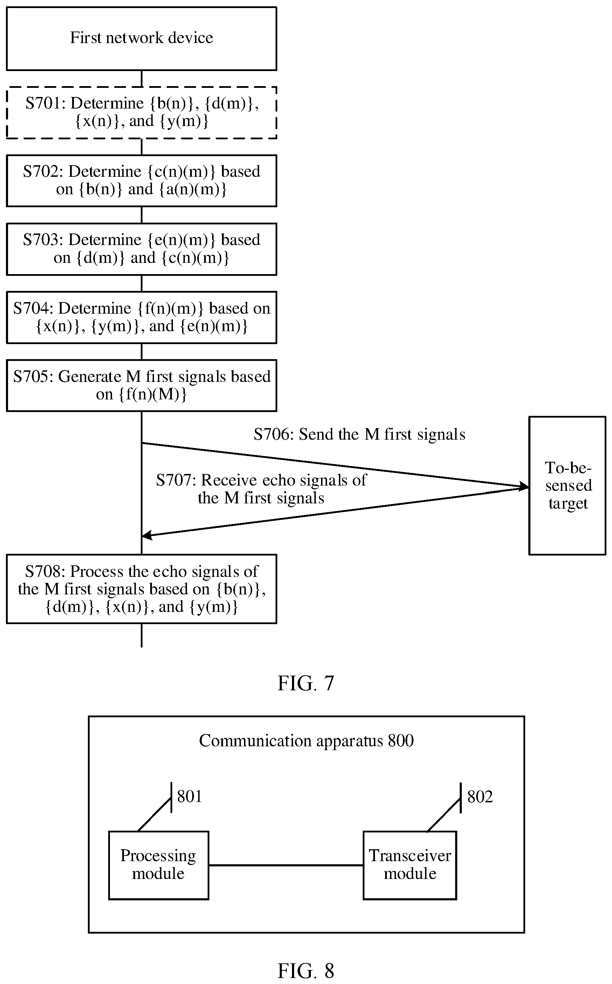

FIG. 6 describes a procedure in which embodiments of this application are applied to the sensing scenario shown in FIG. 2C. The following describes a procedure in which an embodiment of this application is applied to the sensing scenario shown in FIG. 2D, as shown in FIG. 7.

FIG. 7 shows an example of a schematic flowchart of a communication method according to an embodiment of this application. This embodiment may be applied to the sensing scenario shown in FIG. 2D. The first communication apparatus may be a first network device. As shown in FIG. 7, the method may include the following content.

S701: The first network device determines $\{b(n)\}$, $\{d(m)\}$, $\{x(n)\}$, and $\{y(m)\}$.

S701 is an optional step, and is represented by a dashed line in FIG. 7. For a process of determining $\{b(n)\}$, $\{d(m)\}$, $\{x(n)\}$, and $\{y(m)\}$, refer to content in the embodiment shown in FIG. 3. Details are not described again.

S702: The first network device determines $\{c(n)(m)\}$ based on $\{b(n)\}$ and $\{a(n)(m)\}$.

For example, the first network device may process $\{a(n)(m)\}$ based on $\{b(n)\}$ to obtain $\{c(n)(m)\}$. An element $c(n)(m)$ in $\{c(n)(m)\}$ satisfies $c(n)(m) = a(n)(m) \times b(n)$. Optionally, $\{a(n)(m)\}$ may be obtained by performing an N-point Fourier transform on $\{h(n)(m)\}$; or $\{a(n)(m)\}$ may be obtained by performing an M-point Fourier transform on $\{h(n)(m)\}$; or $\{a(n)(m)\}$ may be obtained by performing both an N-point Fourier transform and an M-point Fourier transform on $\{h(n)(m)\}$. For a specific implementation process of S702, refer to content of S301. Details are not described again.

S703: The first network device determines $\{e(n)(m)\}$ based on $\{d(m)\}$ and $\{c(n)(m)\}$.

For example, the first network device may process $\{c(n)(m)\}$ based on $\{d(m)\}$ to obtain $\{e(n)(m)\}$. An element $e(n)(m)$ in $\{e(n)(m)\}$ satisfies $e(n)(m) = c(n)(m) \times d(m)$. For a specific implementation process of S703, refer to content of S302. Details are not described again.

S704: The first network device determines $\{f(n)(m)\}$ based on $\{x(n)\}$, $\{y(m)\}$, and $\{e(n)(m)\}$.

For example, the first network device may process $\{e(n)(m)\}$ based on $\{x(n)\}$ and/or $\{y(m)\}$ to obtain $\{f(n)(m)\}$. In FIG. 7, an example in which $\{e(n)(m)\}$ is processed based on $\{x(n)\}$ and $\{y(m)\}$ is used. An element f(n)(m) in $\{f(n)(m)\}$ satisfies $f(n)(m) = e(n)(m) \times x(n) \times y(m)$. For a specific implementation process of S704, refer to related content of S303. Details are not described again.

S705: The first network device generates M first signals based on $\{f(n)(m)\}$.

The M first signals are located in M time units. An $i^{th}$ first signal among the M first signals is located in an $i^{th}$ time unit among the M time units. For a specific implementation process of S705, refer to related content of S303. Details are not described again.

S706: The first network device sends the M first signals.

S707: The first network device receives echo signals of the M first signals.

In this embodiment, the first network device sends the M first signals, and the M first signals are reflected on a to-be-sensed target. Correspondingly, the first network device receives the echo signals of the M first signals. For a specific implementation process of S706 and S707, refer to related content of S303 and S304b. Details are not described again.

S708: The first network device processes the echo signals of the M first signals based on $\{b(n)\}$, $\{d(m)\}$, $\{x(n)\}$, and $\{y(m)\}$.

For example, the first network device may process the echo signals of the M first signals based on $\{b(n)\}$, $\{d(m)\}$, $\{x(n)\}$, and $\{y(m)\}$. For a specific implementation process of S708, refer to content of S305b. Details are not described again.

In embodiments provided in this application, the methods provided in embodiments of this application are separately described from a perspective of the first communication apparatus and a perspective of interaction between the first communication apparatus and the second communication apparatus. Steps performed by the communication apparatus (for example, the first communication apparatus or the second communication apparatus) may be implemented by different functional entities that form the terminal device. The communication apparatus (for example, the first communication apparatus or the second communication apparatus) may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

The following describes, with reference to accompanying drawings, communication apparatuses for implementing the foregoing methods in embodiments of this application. Therefore, all the foregoing content may be used in the following embodiments. Repeated content is not described again.

FIG. 8 shows an example of a diagram of a structure of a communication apparatus 800. The communication apparatus 800 may implement functions or steps implemented by the first communication apparatus or the second communication apparatus in the foregoing method embodiments.

For example, the communication apparatus 800 may be a network device or a component (for example, a DU) in the network device, or a terminal device or a component in the terminal device. For example, the communication apparatus 800 is a first network device or a component in the first network device, a second network device or a component in the second network device, a first terminal device or a component in the first terminal device, or a second terminal device or a component in the second terminal device.

In an implementation, the communication apparatus 800 may include a processing module 801 and a transceiver module 802. The processing module 801 may be configured to perform data processing, for example, perform the foregoing method embodiments. The processing module 801 may also be referred to as a processing unit or the like. The transceiver module 802 may be configured to implement a corresponding communication function, for example, receive or send related data, information, or a message. The transceiver module 802 may also be referred to as a communication interface, a communication module, a transceiver unit, or the like.

It should be noted that the communication apparatus 800 may include the processing module 801, but does not include the transceiver module 802. Alternatively, the communication apparatus 800 may include the transceiver module 802, but does not include the processing module 801. This may specifically depend on whether the foregoing solution performed by the communication apparatus 800 includes a processing action and sending and receiving actions.

Optionally, the communication apparatus 800 may further include a storage module not shown in FIG. 8. The storage module may be configured to store an instruction and/or data, and the processing module 801 may read the instruction and/or the data in the storage module, to enable the communication apparatus 800 to implement the foregoing method embodiments.

Optionally, the transceiver module 802 may include a sending module and a receiving module. The sending module is configured to perform the sending operation in the foregoing method embodiments. The receiving module is configured to perform the receiving operation in the foregoing method embodiments.

It should be noted that the communication apparatus 800 may include the sending module, but does not include the receiving module. Alternatively, the communication apparatus 800 may include the receiving module, but does not include the sending module. This may specifically depend on whether the foregoing solution performed by the communication apparatus 800 includes a sending action and a receiving action.

Optionally, the communication apparatus 800 is a chip system, the transceiver unit may be an input/output interface of a chip (for example, a baseband chip), and the processing unit may be a processor of the chip system.

In a first implementation, the communication apparatus 800 may be a network device (for example, a first network device or a second network device), a chip applied to the network device, or another combined device or component that has a function of the network device.

In an example, the communication apparatus 800 is a first network device or a component in the first network device. The communication apparatus 800 may perform the following content: The processing module 801 may be configured to determine a first symbol based on a first sequence and a fourth symbol; and determine a second symbol based on a second sequence and the first symbol (or the processing module 801 may be configured to determine a second symbol based on a first sequence, a second sequence, and a fourth signal); and the transceiver module 802 may be configured to send M first signals, where the M first signals are generated based on the second symbol, the M first signals are located in M time units, an $i^{th}$ first signal among the M first signals is located in an $i^{th}$ time unit among the M time units.

Optionally, the transceiver module 802 may be further configured to send first information; or may be further configured to receive first information, where the first information may indicate at least one of $\alpha_1$, $\beta_1$, or $\gamma_1$, and/or the first information indicates at least one of $\alpha_2$, $\beta_2$, or $\gamma_2$.

Optionally, the processing module 801 may be further configured to determine a third symbol based on a first coefficient, a second coefficient, and the second symbol, and perform an inverse Fourier transform on the third symbol to obtain the M first signals.

Optionally, the transceiver module 802 may be further configured to receive echo signals of the M first signals.

Optionally, the processing module 801 may be further configured to process the echo signals of the M first signals.

In another example, the communication apparatus 800 is a second network device or a component in the second network device. The communication apparatus 800 may perform the following content: The transceiver module 802 may be configured to receive M first signals, where the M first signals are located in M time units, an $i^{th}$ first signal among the M first signals is located in an $i^{th}$ time unit among the M time units, M is a positive integer, the M first signals are generated based on a second symbol, the second symbol is determined based on a second sequence and a first symbol, and the first symbol is determined based on a first sequence and a fourth symbol; and the processing module 801 may be configured to process the M first signals.

Optionally, the transceiver module 802 may be further configured to send first information; or may be further configured to receive first information, where the first information may indicate at least one of $\alpha_1$, $\beta_1$, or $\gamma_1$, and/or the first information indicates at least one of $\alpha_2$, $\beta_2$, or $\gamma_2$.

Optionally, the processing module 801 may process the M first signals in the following manner: obtaining K-bit information based on the M first signals.

In a second implementation, the communication apparatus 800 may be a terminal device (for example, a first terminal device or a second terminal device), a chip applied to the terminal device, or another combined device or component that has a function of the terminal device.

In an example, the communication apparatus 800 is a first terminal device or a component in the first terminal device. The communication apparatus 800 may perform the following content: The processing module 801 may be configured to determine a first symbol based on a first sequence and a fourth symbol; and determine a second symbol based on a second sequence and the first symbol (or the processing module 801 may be configured to determine a second symbol based on a first sequence, a second sequence, and a fourth signal); and the transceiver module 802 may be configured to send M first signals, where the M first signals are generated based on the second symbol, the M first signals are located in M time units, an $i^{\text{th}}$ first signal among the M first signals is located in an $i^{\text{th}}$ time unit among the M time units.

Optionally, the transceiver module 802 may be further configured to receive first information, where the first information may indicate at least one of $\alpha_1$, $\beta_1$, or $\gamma_1$, and/or the first information indicates at least one of $\alpha_2$, $\beta_2$, or $\gamma_2$.

Optionally, the processing module 801 may be further configured to determine a third symbol based on a first coefficient, a second coefficient, and the second symbol, and perform an inverse Fourier transform on the third symbol to obtain the M first signals.

In another example, the communication apparatus 800 is a second terminal device or a component in the second terminal device. The communication apparatus 800 may perform the following content: The transceiver module 802 may be configured to receive M first signals, where the M first signals are located in M time units, an $i^{\text{th}}$ first signal among the M first signals is located in an $i^{\text{th}}$ time unit among the M time units, M is a positive integer, the M first signals are generated based on a second symbol, the second symbol is determined based on a second sequence and a first symbol, and the first symbol is determined based on a first sequence and a fourth symbol; and the processing module 801 may be configured to process the M first signals.

Optionally, the transceiver module 802 may be further configured to receive first information, where the first information may indicate at least one of $\alpha_1$, $\beta_1$, or $\gamma_1$, and/or the first information indicates at least one of $\alpha_2$, $\beta_2$, or $\gamma_2$.

Optionally, the processing module 801 may process the M first signals in the following manner: obtaining K-bit information based on the M first signals.

It should be understood that, for more detailed descriptions of corresponding processes performed by the modules, directly refer to related descriptions in the method embodiment shown in any one of FIG. 3 to FIG. 7. For brevity, details are not described herein again.

The processing module 801 in the foregoing embodiment may be implemented by at least one processor or a processor-related circuit. The transceiver module 802 may be implemented by a transceiver or a transceiver-related circuit. The storage module may be implemented by at least one memory.

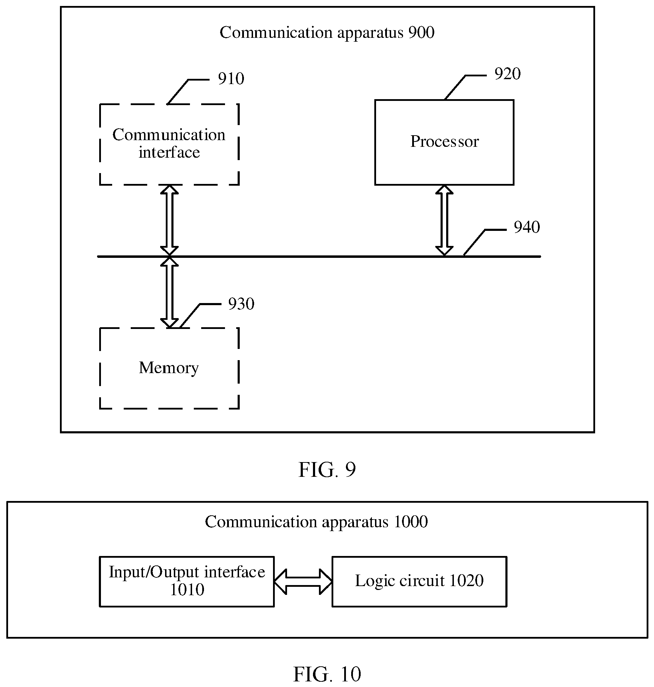

FIG. 9 is a diagram of a structure of a communication apparatus 900 according to an embodiment of this application. The communication apparatus 900 may include a processor 920, configured to implement or support the communication apparatus 900 in implementing a function of the first communication apparatus or the second communication apparatus in any method embodiment of this application. For details, refer to detailed descriptions in the foregoing method embodiment. Details are not described herein again. For example, the processor 920 is configured to read and execute a program instruction by using a communication interface, to enable the communication apparatus 900 to implement a corresponding method. The processor 920 may include one or more processors. This is not limited.

It should be noted that the foregoing mentioned functional modules may be implemented by hardware, or may be implemented by a combination of hardware and software. This is not limited. In addition, when the communication apparatus 900 includes only the processor 920, the communication apparatus 900 may be a chip, or may be a chip system.

For example, the communication apparatus 900 may be a chip system. The chip system may include a chip, or may include a chip and another discrete component. This is not limited.

Optionally, the communication apparatus 900 may further include a memory 930, configured to store a program instruction and/or data. The memory 930 is coupled to the processor 920. The coupling may be understood as an indirect coupling or a communication connection between apparatuses, units, or modules, may be in an electrical form, a mechanical from, or another form, and is used for information exchange between the apparatuses, the units, or the modules. The processor 920 may cooperate with the memory 930. The processor 920 and the memory 930 may be integrated together, or may be disposed separately.

Further, the processor 920 is configured to execute the program instruction stored in the memory 930, to enable the communication apparatus 900 to implement a corresponding method.

One or more memories in the memory 930 may be included in the processor, or the memory 930 may exist independently, for example, an off-chip memory, and is connected to the processor 920 by using a communication bus (represented by a bold line 940 in FIG. 9). The memory 930 and the processor 920 may alternatively be integrated together.

Optionally, the communication apparatus 900 further includes a communication interface 910 (represented by a dashed line in FIG. 9), configured to communicate with another device by using a transmission medium, so that an apparatus in the communication apparatus 900 may communicate with the another device. For example, when the communication apparatus is a first communication apparatus, the another device may be a second communication apparatus or the like. The processor 920 may send and receive data by using the communication interface 910. For example, the processor 920 may be configured to control the communication interface 910 to perform signal receiving and/or sending.

The communication interface 910 may be specifically a transceiver. In hardware implementation, the transceiver may be configured to implement a function of the foregoing transceiver module 802, and the transceiver is integrated into the communication apparatus 900 to form the communication interface 910.

It should be noted that the communication interface 910 may have a sending function and a receiving function, and may implement signal receiving and sending; or may have a sending function, but does not have a receiving function, and is configured to implement signal sending; or may have a receiving function, but does not have a sending function, and is configured to implement signal receiving.

It should be noted that a specific connection medium between the communication interface 910, the processor 920, and the memory 930 is not limited in this embodiment of this application. In FIG. 9, the memory 930, the processor 920, and the communication interface 910 are connected by using the communication bus 940. A connection manner between other components is merely an example for description, and is not used as a limitation. The communication bus 940 may be classified as an address bus, a data bus, a control bus, or the like. For ease of representation, only one bold line is used to represent the bus in FIG. 9, but this does not mean that there is only one communication bus or only one type of communication bus.

The processor 920 in this embodiment of this application may be a general-purpose processor, a digital signal processor, an application-specific integrated circuit, a field programmable gate array or another programmable logic device, a discrete gate or a transistor logic device, or a discrete hardware component. The general-purpose processor may be a microprocessor or any conventional processor or the like. The method disclosed with reference to embodiments of this application may be performed and completed by hardware in the processor, or may be performed and completed by a combination of hardware and software in the processor.

In this embodiment of this application, the memory 930 may be a nonvolatile memory, for example, a hard disk drive (hard disk drive, HDD) or a solid-state drive (solid-state drive, SSD), or may be a volatile memory (volatile memory), for example, a random-access memory (random-access memory, RAM). Alternatively, the memory may be any other medium that is configured to carry or store program code in a form of an instruction or a data structure and that can be accessed by a computer; or may be a circuit or any other apparatus that can implement a storage function, and is configured to store a program instruction and/or data.

Specifically, the communication apparatus 900 may be a network device or a component (for example, a DU) in the network device, or a terminal device or a component in the terminal device. For example, the communication apparatus 900 is a first network device or a component in the first network device, a second network device or a component in the second network device, a first terminal device or a component in the first terminal device, or a second terminal device or a component in the second terminal device.

In a first possible implementation, the communication apparatus 900 may be a DU in the first network device, and is configured to implement a related method corresponding to the first network device in the foregoing embodiments. For specific functions, refer to descriptions in the foregoing embodiments.

For example, the related method corresponding to the first network device in the foregoing embodiments includes: determining a first symbol based on a first sequence and a fourth symbol, and determining a second symbol based on a second sequence and the first symbol (or determining a second symbol based on a first sequence, a second sequence, and a fourth signal); and sending M first signals, where the M first signals are generated based on the second symbol, for example, sending the M first signals to an RU in the first network device.

Optionally, the related method corresponding to the first network device in the foregoing embodiments includes: sending first information, for example, sending first information to an RU; or receiving first information, for example, receiving first information from an RU in the first network device or receiving first information from a CU in the first network device; or receiving first information and sending the first information, for example, receiving first information from a CU in the first network device, and sending the first information to an RU. The first information may indicate at least one of $\alpha_1$, $\beta_1$, or $\gamma_1$, and/or the first information indicates at least one of $\alpha_2$, $\beta_2$, or $\gamma_2$.

Optionally, the method corresponding to the first network device in the foregoing embodiments includes:

determining a third symbol based on a first coefficient, a second coefficient, and the second symbol, and performing an inverse Fourier transform on the third symbol to obtain the M first signals.

Optionally, the related method corresponding to the first network device in the foregoing embodiments includes: receiving echo signals of the M first signals, for example, receiving echo signals of the M first signals from an RU in the first network device.

Optionally, the related method corresponding to the first network device in the foregoing embodiments includes: processing the echo signals of the M first signals.

In a second possible implementation, the communication apparatus 900 may be a CU in the first network device, and is configured to implement a related method corresponding to the first network device in the foregoing embodiments. For specific functions, refer to descriptions in the foregoing embodiments.

For example, the related method corresponding to the first network device in the foregoing embodiments includes: determining first information, and sending the first information, for example, sending the first information to a DU in the first network device. The first information may indicate at least one of $\alpha_1$, $\beta_1$, or $\gamma_1$, and/or the first information indicates at least one of $\alpha_2$, $\beta_2$, or $\gamma_2$.

In a third possible implementation, the communication apparatus 900 may be a RU in the first network device, and is configured to implement a related method corresponding to the first network device in the foregoing embodiments. For specific functions, refer to descriptions in the foregoing embodiments.

For example, the related method corresponding to the first network device in the foregoing embodiments includes: receiving M first signals, for example, receiving M first signals from an DU in the first network device, where the M first signals are generated based on a second symbol, the second symbol is determined based on a second sequence and a first symbol, and the first symbol is determined based on a first sequence and a fourth symbol; and sending the M first signals to the second network device or the second terminal device.

Optionally, the related method corresponding to the first network device in the foregoing embodiments includes: receiving first information, for example, receiving first information from a DU in the first network device, and sending the first information to the second network device or the second terminal device; or receiving first information from the second network device, and sending the first information, for example, sending the first information to a DU in the first network device.

In a fourth possible implementation, the communication apparatus 900 may be a DU in the second network device, and is configured to implement a related method corresponding to the second network device in the foregoing embodiments. For specific functions, refer to descriptions in the foregoing embodiments.

For example, the related method corresponding to the second network device in the foregoing embodiments includes: receiving M first signals, for example, receiving M first signals from an RU in the first network device, where the M first signals are generated based on a second symbol, the second symbol is determined based on a second sequence and a first symbol, and the first symbol is determined based on a first sequence and a fourth symbol; and processing the M first signals.

Optionally, the related method corresponding to the second network device in the foregoing embodiments includes: sending first information, for example, sending first information to an RU in the first network device; or receiving first information, for example, receiving first information from an RU in the first network device or receiving first information from a CU in the first network device; or receiving first information and sending the first information, for example, receiving first information from a CU in the first network device, and sending the first information to an RU in the first network device.

Optionally, the related method corresponding to the second network device in the foregoing embodiments includes: obtaining K-bit information based on the M first signals.

In a fifth possible implementation, the communication apparatus 900 may be a CU in the second network device, and is configured to implement a related method corresponding to the second network device in the foregoing embodiments. For specific functions, refer to descriptions in the foregoing embodiments.

For example, the related method corresponding to the second network device in the foregoing embodiments includes: determining first information, and sending the first information, for example, sending the first information to a DU in the first network device. The first information may indicate at least one of $\alpha_1$, $\beta_1$, or $\gamma_1$, and/or the first information indicates at least one of $\alpha_2$, $\beta_2$, or $\gamma_2$.

In a sixth possible implementation, the communication apparatus 900 may be a RU in the second network device, and is configured to implement a related method corresponding to the second network device in the foregoing embodiments. For specific functions, refer to descriptions in the foregoing embodiments.

For example, the related method corresponding to the second network device in the foregoing embodiments includes: receiving M first signals from the first network device or the first terminal device, where the M first signals are generated based on a second symbol, the second symbol is determined based on a second sequence and a first symbol, and the first symbol is determined based on a first sequence and a fourth symbol; and sending the M first signals, for example, sending the M first signals to a DU in the first network device.

Optionally, the related method corresponding to the second network device in the foregoing embodiments includes: receiving first information, for example, receiving first information from a DU in the first network device, and sending the first information to the first network device or the first terminal device; or receiving first information from the first network device, and sending the first information, for example, sending the first information to a DU in the first network device.

In a seventh possible implementation, the communication apparatus 900 may be the first terminal device, and is configured to implement a related method corresponding to the first terminal device in the foregoing embodiments. For specific functions, refer to descriptions in the foregoing embodiments.

For example, the related method corresponding to the first terminal device in the foregoing embodiments includes: determining a first symbol based on a first sequence and a fourth symbol, and determining a second symbol based on a second sequence and the first symbol (or determining a second symbol based on a first sequence, a second sequence, and a fourth signal); and sending M first signals, where the M first signals are generated based on the second symbol, the M first signals are located in M time units, an $i^{th}$ first signal among the M first signals is located in an $i^{th}$ time unit among the M time units.

Optionally, the related method corresponding to the first terminal device in the foregoing embodiments includes: receiving first information, where the first information may indicate at least one of $\alpha_1$, $\beta_1$, or $\gamma_1$, and/or the first information indicates at least one of $\alpha_2$, $\beta_2$, or $\gamma_2$.

Optionally, the related method corresponding to the first terminal device in the foregoing embodiments includes: determining a third symbol based on a first coefficient, a second coefficient, and the second symbol, and performing an inverse Fourier transform on the third symbol to obtain the M first signals.

In an eighth possible implementation, the communication apparatus 900 may be the second terminal device, and is configured to implement a related method corresponding to the second terminal device in the foregoing embodiments. For specific functions, refer to descriptions in the foregoing embodiments.

For example, the related method corresponding to the second terminal device in the foregoing embodiments includes: receiving M first signals, where the M first signals are located in M time units, an $i^{th}$ first signal among the M first signals is located in an $i^{th}$ time unit among the M time units, M is a positive integer, the M first signals are generated based on a second symbol, the second symbol is determined based on a second sequence and a first symbol, and the first symbol is determined based on a first sequence and a fourth symbol; and processing the M first signals.

Optionally, the related method corresponding to the second terminal device in the foregoing embodiments includes: receiving first information, where the first information may indicate at least one of $\alpha_1$, $\beta_1$, or $\gamma_1$, and/or the first information indicates at least one of $\alpha_2$, $\beta_2$, or $\gamma_2$.

Optionally, the related method corresponding to the second terminal device in the foregoing embodiments includes: obtaining K-bit information based on the M first signals.

Based on the same idea, referring to FIG. 10, an embodiment of this application further provides another communication apparatus 1000, including an input/output interface 1010 and a logic circuit 1020. The input/output interface 1010 is configured to receive a code instruction and transmit the code instruction to the logic circuit 1020. The logic circuit 1020 is configured to run the code instruction to perform the method performed by the first communication apparatus or the second communication apparatus in any one of the foregoing embodiments.

For example, the communication apparatus 1000 may be a network device or a component (for example, a DU) in the network device, or a terminal device or a component in the terminal device. For example, the communication apparatus 1000 is a first network device or a component in the first network device, a second network device or a component in the second network device, a first terminal device or a component in the first terminal device, or a second terminal device or a component in the second terminal device.

Operations performed by the communication apparatus 1000 applied to a network device (for example, a first network device or a second network device) or a terminal device (for example, a first terminal device or a second terminal device) are described in detail below.

In a first implementation, the communication apparatus 1000 may be applied to a network device (for example, a first network device or a second network device), to perform the method performed by the foregoing network device, which is specifically, for example, the method performed by the network device in any one of the embodiments shown in FIG. 3 to FIG. 7.

For example, the communication apparatus 1000 is a first network device or a component in the first network device. The communication apparatus 1000 may perform the following content: determining a first symbol based on a first sequence and a fourth symbol, and determining a second symbol based on a second sequence and the first symbol (or determining a second symbol based on a first sequence, a second sequence, and a fourth signal); and sending M first signals, where the M first signals are generated based on the second symbol, the M first signals are located in M time units, an $i^{th}$ first signal among the M first signals is located in an $i^{th}$ time unit among the M time units.

Optionally, the communication apparatus 1000 may further send first information; or may further receive first information, where the first information may indicate at least one of $\alpha_1$, $\beta_1$, or $\gamma_1$, and/or the first information indicates at least one of $\alpha_2$, $\beta_2$, or $\gamma_2$.

Optionally, the communication apparatus 1000 may further determine a third symbol based on a first coefficient, a second coefficient, and the second symbol, and perform an inverse Fourier transform on the third symbol to obtain the M first signals.

Optionally, the communication apparatus 1000 may further receive echo signals of the M first signals.

Optionally, the communication apparatus 1000 may further process the echo signals of the M first signals.

For another example, the communication apparatus 1000 is a second network device or a component in the second network device. The communication apparatus 1000 may perform the following content: receiving M first signals, where the M first signals are located in M time units, an $i^{th}$ first signal among the M first signals is located in an $i^{th}$ time unit among the M time units, M is a positive integer, the M first signals are generated based on a second symbol, the second symbol is determined based on a second sequence and a first symbol, and the first symbol is determined based on a first sequence and a fourth symbol; and processing the M first signals.

Optionally, the communication apparatus 1000 may further send first information; or may further receive first information, where the first information may indicate at least one of $\alpha_1$, $\beta_1$, or $\gamma_1$, and/or the first information indicates at least one of $\alpha_2$, $\beta_2$, or $\gamma_2$.

Optionally, the communication apparatus 1000 may process the M first signals in the following manner: obtaining K-bit information based on the M first signals.

The communication apparatus 1000 provided in this embodiment may be applied to a network device to implement the method performed by the network device. Therefore, for technical effects that can be achieved by this embodiment, refer to the foregoing method embodiments. Details are not described herein again.

In a second implementation, the communication apparatus 1000 may be applied to a terminal device (for example, a first terminal device or a second terminal device), to perform the method performed by the foregoing terminal device, which is specifically, for example, the method performed by the terminal device in any one of the embodiments shown in FIG. 3 to FIG. 7.

For example, the communication apparatus 1000 is a first terminal device or a component in the first terminal device. The communication apparatus 1000 may perform the following content: determining a first symbol based on a first sequence and a fourth symbol, and determining a second symbol based on a second sequence and the first symbol (or determining a second symbol based on a first sequence, a second sequence, and a fourth signal); and sending M first signals, where the M first signals are generated based on the second symbol, the M first signals are located in M time units, an $i^{th}$ first signal among the M first signals is located in an $i^{th}$ time unit among the M time units.

Optionally, the communication apparatus 1000 may further receive first information, where the first information may indicate at least one of $\alpha_1$, $\beta_1$, or $\gamma_1$, and/or the first information indicates at least one of $\alpha_2$, $\beta_2$, or $\gamma_2$.

Optionally, the communication apparatus 1000 may further determine a third symbol based on a first coefficient, a second coefficient, and the second symbol, and perform an inverse Fourier transform on the third symbol to obtain the M first signals.

For another example, the communication apparatus 1000 is a second terminal device or a component in the second terminal device. The communication apparatus 1000 may perform the following content: receiving M first signals, where the M first signals are located in M time units, an $i^{th}$ first signal among the M first signals is located in an $i^{th}$ time unit among the M time units, M is a positive integer, the M first signals are generated based on a second symbol, the second symbol is determined based on a second sequence and a first symbol, and the first symbol is determined based on a first sequence and a fourth symbol; and processing the M first signals.

Optionally, the communication apparatus 1000 may further receive first information, where the first information may indicate at least one of $\alpha_1$, $\beta_1$, or $\gamma_1$, and/or the first information indicates at least one of $\alpha_2$, $\beta_2$, or $\gamma_2$.

Optionally, the communication apparatus 1000 may process the M first signals in the following manner: obtaining K-bit information based on the M first signals.

The communication apparatus 1000 provided in this embodiment may be applied to a terminal device to implement the method performed by the terminal device. Therefore, for technical effects that can be achieved by this embodiment, refer to the foregoing method embodiments. Details are not described herein again.

An embodiment of this application further provides a communication system. The communication system may include one or more of the following: a first communication apparatus or a second communication apparatus. For the first communication apparatus or the second communication apparatus, refer to the descriptions in the foregoing method embodiments. Details are not described again.

An embodiment of this application further provides a computer-readable storage medium, including a program instruction. When the program instruction is run on a computer, the computer is enabled to perform the methods or steps for the first communication apparatus or the second communication apparatus in the foregoing embodiments.

An embodiment of this application further provides a computer program product, including a program instruction. When the program instruction is run on a computer, the computer is enabled to perform the methods or steps for the first communication apparatus or the second communication apparatus in the foregoing embodiments.

An embodiment of this application provides a chip system. The chip system includes a processor, configured to implement a function (for example, perform a corresponding method or step) of the first communication apparatus or the second communication apparatus in the foregoing methods. The chip system may include a chip, or may include a chip and another discrete component.

Optionally, the chip system further includes a memory, and the memory is configured to store a program instruction, to enable the processor to read and execute the program instruction, to implement a corresponding method.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

**1.** A communication method, wherein the method comprises:

determining $\{c(n)(m)\}$ based on $\{b(n)\}$ and $\{a(n)(m)\}$, wherein $\{b(n)\}$ comprises N elements, and $\{a(n)(m)\}$ and $\{c(n)(m)\}$ each comprises N × M elements, n belongs to $\{1, ..., N\}$, m belongs to $\{1, ..., M\}$, and N and M are positive integers;
determining $\{e(n)(m)\}$ based on $\{d(m)\}$ and $\{c(n)(m)\}$, wherein $\{d(m)\}$ comprises M elements, and $\{e(n)(m)\}$ comprises N × M elements; and
sending M first signals, wherein the M first signals are located in M time units, the M first signals are generated based on $\{e(n)(m)\}$, an $i^{th}$ first signal among the M first signals is located in an $i^{th}$ time unit among the M time units, and i is a positive integer less than or equal to M, wherein

an element c(n)(m) in *{c(n)(m)}* satisfies *c(n)(m) = a(n)(m)* $\times$ *b(n)* or *c(n)(m) = a(n)(m)* $\times$ *B(n), B(n)* belongs to *{B(n)}*, and *{B(n)}* is obtained by performing a Fourier transform on *{b(n)}*; and an element e(n)(m) in *{e(n)(m)}* satisfies e(n)(m) = c(n)(m) $\times$ d(m) or e(n)(m) = c(n)(m) $\times$ D(m), D(m) belongs to *{D(m)}*, and *{D(m)}* is obtained by performing a Fourier transform on *{d(m)}*.

2.  The method according to claim 1, wherein

an element b(n) in *{b(n)}* satisfies $\quad b(n) = e^{-j\frac{2\pi}{N}(\alpha_1 n^2 + \beta_1 n + \gamma_1)} \quad$ or $\quad b(n) = e^{-j\frac{2\pi}{N}(\alpha_1 n^2 + \beta_1 n)}$ ,

wherein $\alpha_1$, $\beta_1$, and $\gamma_1$ are all real numbers; and/or

an element d(m) in *{d(m)}* satisfies $\quad d(m) = e^{-j\frac{2\pi}{M}(\alpha_2 m^2 + \beta_2 m + \gamma_2)} \quad$ or $\quad d(m) = e^{-j\frac{2\pi}{M}(\alpha_2 m^2 + \beta_2 m)}$ ,

wherein $\alpha_2$, $\beta_2$, and $\gamma_2$ are all real numbers.

3.  The method according to claim 2, wherein the method further comprises:
    sending first information, wherein the first information indicates at least one of $\alpha_1$, $\beta_1$, or $\gamma_1$, and/or the first information indicates at least one of $\alpha_2$, $\beta_2$, or $\gamma_2$.

4.  The method according to claim 2, wherein the method further comprises:
    receiving first information, wherein the first information indicates at least one of $\alpha_1$, $\beta_1$, or $\gamma_1$, and/or the first information indicates at least one of $\alpha_2$, $\beta_2$, or $\gamma_2$.

5.  The method according to any one of claims 1 to 4, wherein

    {a(*n*)(*m*)} is obtained by performing an N-point Fourier transform on *{h(n)(m)}*; or
    {a(*n*)(*m*)} is obtained by performing an M-point Fourier transform on *{h(n)(m)}*; or
    {a(*n*)(*m*)} is obtained by performing both an N-point Fourier transform and an M-point Fourier transform on *{h(n) (m)}*, wherein
    *{h(n)(m)}* comprises N $\times$ M elements.

6.  The method according to claim 5, wherein at least one element in {h(n)(m)} is determined based on K-bit information, wherein K is one of 1, 2, 4, 6, 8, 10, 12, or 14.

7.  The method according to any one of claims 1 to 6, wherein the method further comprises:

    determining *{f(n)(m)}* based on *{x(n)}*, *{y(m)}*, and *{e(n)(m)}*, wherein *{x(n)}* comprises N elements, {y(m)} comprises M elements, *{f(n)(m)}* comprises N $\times$ M elements, and an element f(n)(m) in *{f(n)(m)}* satisfies *f(n) (m) = e(n)(m)* $\times$ *x(n)* $\times$ *y(m)*; and
    performing an inverse Fourier transform on *{f(n)(m)}* to obtain the M first signals, wherein
    an element *x(n)* in *{x(n)}* satisfies a first characteristic, a second characteristic, a third characteristic, or a fourth characteristic, and/or an element *y(m)* in *{y(m)}* satisfies a fifth characteristic, a sixth characteristic, a seventh characteristic, or an eighth characteristic;
    the first characteristic is: when n is less than *p*, *x(n)* is less than *x(n* + 1), and when n is greater than *p*, *x(n)* is less than or equal to *x(n* - 1); the second characteristic is: when n is less than *p*, *x(n)* is greater than *x(n* + 1), and when n is greater than *p*, *x(n)* is greater than or equal to *x(n* - 1); the third characteristic is: when n is less than *p*1, *x(n)* is greater than *x(n* + 1), when n is greater than *p*1 and less than *p*2, *x(n)* is greater than or equal to *x(n* - 1), when n is greater than p2 and less than p3, *x(n)* is less than or equal to *(n* - 1), and when n is greater than *p*3, *x(n)* is greater than or equal to *x(n* - 1); the fourth characteristic is: when n is less than *p*1, *x(n)* is less than *x(n* + 1), when *n* is greater than *p*1 and less than *p*2, *x(n)* is less than or equal to *x(n* - 1), when n is greater than *p*2 and less than *p*3, *x (n)* is greater than or equal to *(n* - 1), and when n is greater than *p*3, *x(n)* is less than or equal to *x(n* - 1); and *p, p*1, *p*2, and *p*3 are all integers greater than 1 and less than N; and
    the fifth characteristic is: when m is less than *q*, *y(m)* is less than *y(m* + 1), and when m is greater than *q*, *y(m)* is less than or equal to *y(m* - 1); the sixth characteristic is: when m is less than *q*, *y(m)* is greater than *y(m* + 1), and when m is greater than *q*, *y(m)* is greater than or equal to *y(m* - 1); the seventh characteristic is: when m is less than *q*1, *y(m)* is greater than *y(m* + 1), when m is greater than q1 and less than *q*2, *y(m)* is greater than or equal to *y(m* - 1), when m is greater than *q*2 and less than *q*3, *y(m)* is less than or equal to *(m* - 1), and when m is greater than *q*3, *y(m)* is greater than or equal to *y(m* - 1); the eighth characteristic is: when m is less than *q1*, *y(m)* is less than y(*m* + 1), when *m* is greater than *q*1 and less than *q*2, *y(m)* is less than or equal to *y(m* - 1), when m is greater than *q*2 and less than $q3$, $y(m)$ is greater than or equal to $(m-1)$, and when m is greater than $q3$, $y(m)$ is less than or equal to $y(m-1)$; and $q$, $q1$, $q2$, and $q3$ are all integers greater than 1 and less than M.

**8.** The method according to any one of claims 1 to 7, wherein the $i^{th}$ first signal is generated based on $\{e(n)(i)\}$ in $\{e(n)(m)\}$, and $\{e(n)(i)\}$ comprises N elements.

**9.** The method according to any one of claims 1 to 8, wherein the method further comprises:
receiving echo signals of the M first signals.

**10.** A communication method, wherein the method comprises:

receiving M first signals, wherein the M first signals are located in M time units, an $i^{th}$ first signal among the M first signals is located in an $i^{th}$ time unit among the M time units, M is a positive integer, and i is a positive integer less than or equal to M; and
processing the M first signals, wherein
the M first signals are generated based on $\{e(n)(m)\}$, $\{e(n)(m)\}$ is determined based on $\{d(m)\}$ and $\{c(n)(m)\}$, $\{c(n)(m)\}$ is determined based on $\{b(n)\}$ and $\{a(n)(m)\}$, $\{e(n)(m)\}$, $\{c(n)(m)\}$, and $\{a(n)(m)\}$ each comprises N $\times$ M elements, $\{d(m)\}$ comprises M elements, $\{b(n)\}$ comprises N elements, n belongs to $\{1, ..., N\}$, m belongs to $\{1, ..., M\}$, and N is a positive integer; and
an element c(n)(m) in $\{c(n)(m)\}$ satisfies $c(n)(m) = a(n)(m) \times b(n)$ or $c(n)(m) = a(n)(m) \times B(n)$, $B(n)$ belongs to $\{B(n)\}$, and $\{B(n)\}$ is obtained by performing a Fourier transform on $\{b(n)\}$; and an element e(n)(m) in $\{e(n)(m)\}$ satisfies $e(n)(m) = c(n)(m) \times d(m)$ or $e(n)(m) = c(n)(m) \times D(m)$, $D(m)$ belongs to $\{D(m)\}$, and $\{D(m)\}$ is obtained by performing a Fourier transform on $\{d(m)\}$.

**11.** The method according to claim 10, wherein

an element b(n) in $\{b(n)\}$ satisfies $b(n) = e^{-j\frac{2\pi}{N}(\alpha_1 n^2 + \beta_1 n + \gamma_1)}$ or $b(n) = e^{-j\frac{2\pi}{N}(\alpha_1 n^2 + \beta_1 n)}$, wherein $\alpha_1$, $\beta_1$, and $\gamma_1$ are all real numbers; and/or

an element d(m) in $\{d(m)\}$ satisfies $d(m) = e^{-j\frac{2\pi}{M}(\alpha_2 m^2 + \beta_2 m + \gamma_2)}$ or $d(m) = e^{-j\frac{2\pi}{M}(\alpha_2 m^2 + \beta_2 m)}$, wherein $\alpha_2$, $\beta_2$, and $\gamma_2$ are all real numbers.

**12.** The method according to claim 11, wherein the method further comprises:
receiving first information, wherein the first information indicates at least one of $\alpha_1$, $\beta_1$, or $\gamma_1$, and/or the first information indicates at least one of $\alpha_2$, $\beta_2$, or $\gamma_2$.

**13.** The method according to claim 11, wherein the method further comprises:
sending first information, wherein the first information indicates at least one of $\alpha_1$, $\beta_1$, or $\gamma_1$, and/or the first information indicates at least one of $\alpha_2$, $\beta_2$, or $\gamma_2$.

**14.** The method according to any one of claims 10 to 13, wherein the processing the M first signals comprises:
obtaining K-bit information based on the M first signals, wherein K is one of 1, 2, 4, 6, 8, 10, 12, or 14.

**15.** The method according to any one of claims 10 to 14, wherein that the M first signals are generated based on $\{e(n)(m)\}$ comprises:

the M first signals are signals obtained by performing an inverse Fourier transform on $\{f(n)(m)\}$, and $\{f(n)(m)\}$ is determined based on $\{x(n)\}$, $\{y(m)\}$, and $\{e(n)(m)\}$, wherein $\{x(n)\}$ comprises N elements, $\{y(m)\}$ comprises M elements, $\{f(n)(m)\}$ comprises N $\times$ M elements, and an element f(n)(m) in $\{f(n)(m)\}$ satisfies $f(n)(m) = e(n)(m) \times x(n) \times y(m)$; and
an element $x(n)$ in $\{x(n)\}$ satisfies a first characteristic, a second characteristic, a third characteristic, or a fourth characteristic, and/or an element $y(m)$ in $\{y(m)\}$ satisfies a fifth characteristic, a sixth characteristic, a seventh characteristic, or an eighth characteristic;
the first characteristic is: when $n$ is less than p, $x(n)$ is less than $x(n+1)$, and when n is greater than $p$, $x(n)$ is less than or equal to $x(n-1)$; the second characteristic is: when n is less than $p$, $x(n)$ is greater than $x(n+1)$, and when n is greater than p, $x(n)$ is greater than or equal to $x(n-1)$; the third characteristic is: when n is less than $p1$, $x(n)$ is greater than $x(n+1)$, when $n$ is greater than $p1$ and less than $p2$, $x(n)$ is greater than or equal to $x(n-1)$, when $n$ is greater than p2 and less than $p3$, $x(n)$ is less than or equal to (n - 1), and when $n$ is greater than $p3$, $x(n)$ is greater than or equal to $x(n - 1)$; the fourth characteristic is: when $n$ is less than $p1$, $x(n)$ is less than $x(n + 1)$, when $n$ is greater than $p1$ and less than $p2$, $x(n)$ is less than or equal to $x(n - 1)$, when $n$ is greater than p2 and less thanp3, $x(n)$ is greater than or equal to $(n - 1)$, and when $n$ is greater than $p3$, $x(n)$ is less than or equal to $x(n - 1)$; and $p, p1, p2,$ and p3 are all integers greater than 1 and less than N; and

the fifth characteristic is: when m is less than $q$, $y(m)$ is less than $y(m + 1)$, and when $m$ is greater than $q$, $y(m)$ is less than or equal to $y(m - 1)$; the sixth characteristic is: when $m$ is less than $q$, $y(m)$ is greater than $y(m + 1)$, and when m is greater than $q$, $y(m)$ is greater than or equal to $y(m - 1)$; the seventh characteristic is: when m is less than $q1$, $y(m)$ is greater than $y(m + 1)$, when $m$ is greater than $q1$ and less than $q2$, $y(m)$ is greater than or equal to $y(m - 1)$, when m is greater than $q2$ and less than $q3$, $y(m)$ is less than or equal to $(m - 1)$, and when m is greater than $q3$, $y(m)$ is greater than or equal to $y(m - 1)$; the eighth characteristic is: when m is less than $q1$, $y(m)$ is less than $y(m + 1)$, when $m$ is greater than q1 and less than $q2$, $y(m)$ is less than or equal to $y(m - 1)$, when m is greater than $q2$ and less than $q3$, $y(m)$ is greater than or equal to $(m - 1)$, and when m is greater than $q3$, $y(m)$ is less than or equal to $y(m - 1)$; and $q, q1, q2,$ and $q3$ are all integers greater than 1 and less than M.

16. The method according to any one of claims 10 to 15, wherein the $i$th first signal is generated based on $\{e(n)(i)\}$ in $\{e(n)(m)\}$, and $\{e(n)(i)\}$ comprises N elements.

17. A communication apparatus, comprising a module configured to perform the method according to any one of claims 1 to 9.

18. A communication apparatus, comprising a module configured to perform the method according to any one of claims 10 to 16.

19. A communication apparatus, comprising at least one processor, wherein the at least one processor is configured to perform the method according to any one of claims 1 to 9.

20. A communication apparatus, comprising at least one processor, wherein the at least one processor is configured to perform the method according to any one of claims 10 to 16.

21. A communication system, comprising a first communication apparatus and a second communication apparatus, wherein the first communication apparatus is configured to perform the method according to any one of claims 1 to 9, and the second communication apparatus is configured to perform the method according to any one of claims 10 to 16.

22. A computer-readable storage medium, wherein the computer-readable storage medium stores a computer program or an instruction, and the computer program or the instruction is used to implement the method according to any one of claims 1 to 9.

23. A computer-readable storage medium, wherein the computer-readable storage medium stores a computer program or an instruction, and the computer program or the instruction is used to implement the method according to any one of claims 10 to 16.

24. A computer program product, wherein the computer program product comprises a computer program, and when the computer program is run on a computer, the computer is enabled to perform the method according to any one of claims 1 to 9.

25. A computer program product, wherein the computer program product comprises a computer program, and when the computer program is run on a computer, the computer is enabled to perform the method according to any one of claims 10 to 16.

FIG. 1

EP 4 787 792 A1

FIG. 2A

FIG. 2B

FIG. 2C

FIG. 2D

First communication apparatus

Second communication apparatus

S301: Determine a first symbol based on a first sequence and a fourth symbol

S302: Determine a second symbol based on a second sequence and the first symbol

S303: Send M first signals, where the M first signals are generated based on the second symbol, and the M first signals are located in M time units

S304a: Receive the M first signals

S304b: Receive echo signals of the M first signals

To-be-sensed target

S305a: Process the M first signals

S305b: Process the echo signals of the M first signals

FIG. 3

First network device

Second terminal device

S401: Determine {b(n)}, {d(m)},
{x(n)}, and {y(m)}

S402: Determine {c(n)(m)} based
on {b(n)} and {a(n)(m)}

S403: Determine {e(n)(m)} based
on {d(m)} and {c(n)(m)}

S404: Determine {f(n)(m)} based
on {x(n)}, {y(m)}, and {e(n)(m)}

S405: Generate M first signals
based on {f(n)(M)}

S406: Send the M first signals

To-be-
sensed
target

S407: First information, where the first information is
used to determine {b(n)}, {d(m)}, {x(n)}, and {y(m)}

S408: Process the M first signals
based on the first information

FIG. 4

First network device

Second network device

S501: Determine {b(n)}, {d(m)},
{x(n)}, and {y(m)}

S502: First information, where the first information is
used to determine {b(n)}, {d(m)}, {x(n)}, and {y(m)}

S503: Determine {b(n)}, {d(m)},
{x(n)}, and {y(m)} based on the
first information

S504: Determine {c(n)(m)} based
on {b(n)} and {a(n)(m)}

S505: Determine {e(n)(m)} based
on {d(m)} and {c(n)(m)}

S506: Determine {f(n)(m)} based
on {x(n)}, {y(m)}, and {e(n)(m)}

S507: Generate M first signals
based on {f(n)(M)}

S508: Send the M first signals

To-be-
sensed
target

S509: Process the M first signals
based on {b(n)}, {d(m)}, {x(n)},
and {y(m)}

FIG. 5

First terminal device

Second network device

S601: Determine {b(n)}, {d(m)}, {x(n)}, and {y(m)}

S602: First information, where the first information is used to determine {b(n)}, {d(m)}, {x(n)}, and {y(m)}

S603: Determine {b(n)}, {d(m)}, {x(n)}, and {y(m)} based on the first information

S604: Determine {c(n)(m)} based on {b(n)} and {a(n)(m)}

S605: Determine {e(n)(m)} based on {d(m)} and {c(n)(m)}

S606: Determine {f(n)(m)} based on {x(n)}, {y(m)}, and {e(n)(m)}

S607: Generate M first signals based on {f(n)(M)}

S608: Send the M first signals

To-be-sensed target

S609: Process the M first signals based on {b(n)}, {d(m)}, {x(n)}, and {y(m)}

FIG. 6

First network device

S701: Determine {b(n)}, {d(m)}, {x(n)}, and {y(m)}

S702: Determine {c(n)(m)} based on {b(n)} and {a(n)(m)}

S703: Determine {e(n)(m)} based on {d(m)} and {c(n)(m)}

S704: Determine {f(n)(m)} based on {x(n)}, {y(m)}, and {e(n)(m)}

S705: Generate M first signals based on {f(n)(M)}

S706: Send the M first signals

S707: Receive echo signals of the M first signals

To-be-sensed target

S708: Process the echo signals of the M first signals based on {b(n)}, {d(m)}, {x(n)}, and {y(m)}

FIG. 7

Communication apparatus 800

801

Processing module

802

Transceiver module

FIG. 8

Communication apparatus 900

910

Communication
interface

920

Processor

940

930

Memory

FIG. 9

Communication apparatus 1000

Input/Output interface
1010

Logic circuit 1020

FIG. 10

## INTERNATIONAL SEARCH REPORT

| International application No. |
| --- |
| **PCT/CN2024/124572** |

| A. | CLASSIFICATION OF SUBJECT MATTER |
| --- | --- |

H04L27/26(2006.01)i;  H04W4/02(2018.01)i;  H04W4/30(2018.01)i

According to International Patent Classification (IPC) or to both national classification and IPC

| B. | FIELDS SEARCHED |
| --- | --- |

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

CNTXT, ENTXT, ENTXTC, DWPI, CJFD: 通信, 元素, 时间, 时隙, 信号, 傅里叶, 傅立叶, 傅氏, 变换, communication, element, time, slot, signal, fourier, transform+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2017193586 A1 (HUAWEI TECHNOLOGIES CO., LTD.) 16 November 2017 (2017-11-16) abstract, and description, pages 2-9 | 1-25 |
| A | CN 111294306 A (HUAWEI TECHNOLOGIES CO., LTD.) 16 June 2020 (2020-06-16) entire document | 1-25 |
| A | CN 115811454 A (ZTE CORP.) 17 March 2023 (2023-03-17) entire document | 1-25 |
| A | US 2010034165 A1 (HAN, Seunghee et al.) 11 February 2010 (2010-02-11) entire document | 1-25 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 January 2025** | **13 January 2025** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 787 792 A1

International application No.

**PCT/CN2024/124572**

| Patent document cited in search report | | | Publication date (day/month/year) | Patent family member(s) | | | Publication date (day/month/year) |
|---|---|---|---|---|---|---|---|
| WO | 2017193586 | A1 | 16 November 2017 | EP | 3454514 | A1 | 13 March 2019 |
| | | | | US | 2019081839 | A1 | 14 March 2019 |
| | | | | IN | 201837044219 | A | 14 December 2018 |
| | | | | CN | 109076048 | A | 21 December 2018 |
| | | | | VN | 62185 | A | 25 March 2019 |
| CN | 111294306 | A | 16 June 2020 | WO | 2020114317 | A1 | 11 June 2020 |
| CN | 115811454 | A | 17 March 2023 | WO | 2023040779 | A1 | 23 March 2023 |
| | | | | EP | 4404517 | A1 | 24 July 2024 |
| | | | | KR | 20240060808 | A | 08 May 2024 |
| | | | | IN | 202427029974 | A | 12 July 2024 |
| US | 2010034165 | A1 | 11 February 2010 | US | 2019158260 | A1 | 23 May 2019 |
| | | | | US | 2017093551 | A1 | 30 March 2017 |
| | | | | US | 2015092742 | A1 | 02 April 2015 |
| | | | | WO | 2008078919 | A2 | 03 July 2008 |
| | | | | US | 2013003675 | A1 | 03 January 2013 |
| | | | | KR | 20080059004 | A | 26 June 2008 |
| | | | | KR | 20080070477 | A | 30 July 2008 |
| | | | | KR | 20080093355 | A | 21 October 2008 |
| | | | | KR | 20130052583 | A | 22 May 2013 |

**REFERENCES CITED IN THE DESCRIPTION**

**Patent documents cited in the description**

- CN 202311418772